# EUROPEAN PATENT APPLICATION

(11) **EP 4 336 232 A2**
(43) Date of publication of application: **13.03.2024**
(21) Application number: 23205569.9
(22) Date of filing: 24.11.2015
(51) Int. Cl.: G02B 6/35

(54) **HIGH RELIABILITY ROBOTIC CROSS-CONNECT SYSTEMS**

(30) Priority: 14.12.2014 US 201462091541 P
(62) Divisional of application: 15870626.7
(71) Applicant: Telescent Inc., Irvine, CA 92606 (US)
(72) Inventor: KEWITSCH, Anthony, Santa Ana, 92704 (US); ZAMBOS, Don, Santa Ana, 92704 (US)
(74) Representative: Stellbrink & Partner Patentanwälte mbB

(57) **Abstract**

The present invention relates to a stacked arrangement of connector rows (102-1 - 102-8) which form a two dimensional array of ports (55), wherein each connector row (102-1 - 102-8) comprises a plurality of connector tracks (39), wherein each connector track (39) includes magnets (14, 15) at a distal end thereof, wherein an N-S polarity and arrangement of the magnets (14, 15) is identical for each connector track (39) and connector row (102-1 - 102-8). The present invention also relates to a fiber optic cross-connect system (200) comprising the arrangement.

## Description

### BACKGROUND OF THE INVENTION

### 1. Field of the Invention

The present invention is directed in general to large scale robotic cross-connect systems providing low loss, software-defined fiber optic connections between a large number of pairs of ports. Mechanisms in the systems incorporate numerous features that ensure reliable operation.

### 2. Description of the Background Art

Large scale automated fiber optic cross-connect switches and software-defined patch-panels enable data centers and data networks to be fully automated, wherein the physical network topologies are software-defined or programmable, for improved efficiencies and cost savings. Current fiber optic switch technologies such as cross-bar switches scale as N² (N is the number of ports) making them ill-suited for large scale production networks. Prior art disclosures of cross-bar switches include U.S. Patent No. 4,955, 686 to Buhrer et al, U.S. Patent No. 5,050,955 to Sjolinder, U.S. Patent No. 6,859,575 to Arol et al, and U.S. Patent No. 2011/0116739A1 to Safrani et al.

More recent automated patch-panel approaches that scale as linearly with the number of ports utilize braided fiber optic strands. Advances in the mathematics of topology and Knot and Braid Theory (U.S. Patent Nos. 8,068,715, 8,463,091, 8,488,938 and 8,805,155 to Kewitsch) have solved the fiber entanglement challenge for dense collections of interconnect strands undergoing arbitrary and unlimited reconfigurations. Since this Knots, Braids and Strands (KBS) technology scales linearly in the number of interconnect strands, significant benefits over cross-bar switches such as density and hardware simplicity are realized. Existing systems featuring autonomous patch panel systems and implementing KBS algorithms in accordance with the Kewitsch patents referenced above typically utilize a pick and place robotic actuation system with a gripper at the end of the robotic arm to grab and transport a fiber optic connector and the fiber optic strand extending therefrom to a central backbone in the system. The robotic arm is of a narrow width and extended depth to allow it to descend into the dense fiber optic interconnect volume with no mechanical interference and no contact with surrounding fibers, yet still having sufficient rigidity to experience minimal deflection under transverse forces including magnetic repulsion and tension originating from the fiber being carried in the gripper therein. However, further improvements in this new class of physical fiber optic switching or connection management system are always desirable, including those relating to improvements in compactness, hardware simplicity and operative reliability, singly or in combination.

### SUMMARY OF THE INVENTION

The present invention relates to apparatus to improve the performance of this new type of cross-connect utilizing braided fiber optic strands and the application of the mathematics of topology to this scaling challenge. In this invention, a highly reliable automated cross-connect system is employed with multiple unique hardware and operative features to provide superior compactness, performance and reliability. For example, a dense three-dimensional matrix of parallel and precisely separated connector elements is distributed through two orthogonal dimensions, with a plurality of multi-functional elements being disposed along each connection path in the third dimension. The connector paths each comprise individual ones of a plurality of linear base elements which are each separately movable to align with a chosen base element in the cross-connect system. The invention includes unique magnetically latched fiber optic connector devices which enable the system to provide multiple different user defined states of insertion loss. The devices include reliable, self-guiding, attraction mode magnetic latching to facilitate repeatable robotic engagement and reconfiguration. Robotic miniature gripper devices that retain the magnetically latched fiber optic connectors are further disclosed, wherein the miniature gripper includes integral sensing and actuation means to ensure proper engagement with a selected connector. Furthermore, the system is configured with movable rows of multiple, spaced apart horizontal connector receptacles, stacked vertically therein. Each row is comprised of multiple parallel connector tracks, and each connector track includes a mating connector receptacle, a fiber optic interface port, and combined mechanical and magnetic reference features which are configured to achieve reliable latching and locating of both the fiber optic connector device and the gripper device. The movable rows of connector receptacles incorporate precision injection molded translation assemblies and actuation means to accurately and precisely translate rows between one of three horizontal locations. These locations generate the vertical row shuffling response as dictated by the KBS algorithm and aid in improving the volumetric efficiency of the system.

The gripper consists of a two-part body, a central body which mechanically engages or interlocks with a particular target connector extended member in between the multiplicity of surrounding extended members, and a driven, translatable outer body or frame incorporating means to engage and sense the reconfigurable internal fiber optic connector assembly. The narrow width gripper, attached to the lower end of the controlled telescopic arm, descends down onto a selected centered connector row until a gripper interlock sensor detects proper engagement with the extended member. The gripper outer body translates parallel to the extended member to plug-in, unplug or partially disconnect the internal connector assembly. The translation mechanism uniquely incorporates a drive line, wrapped around a motor drive shaft with a small but precise excess length to control bidirection lateral translation of the gripper. This obviates the stalling of the drive motor upon a startup acceleration from a state of rest.

The cross-connect system is also based on a three-dimensional array of parallel but precisely laterally separated elongated reference members disposed in an augmentable vertical stack of horizontal rows. The reference members are narrow and of selected uniform length having chosen flexure properties, and include sets of small permanent magnets deployed so as to utilize both magnetic attraction and repulsion forces during different and separate operative states of engagement. Each narrow reference member is positioned to be closely adjacent to a different receiving aperture into which the end of a different optical fiber connector can be inserted. The end apertures lie in transversely disposed horizontal rows in a vertical connection plane and each is positioned to potentially receive the end of the optical fiber connector repositioned by the system. The small permanent magnets along their lengths are positioned selectively and with such polarities as to provide at least two stable insertion positions and also a transversely repulsive force, to maintain adjacent elements separate in a dense three-dimensional array of elements.

This application further discloses a uniquely compact configuration for accessing and repositioning optical fibers on command. Telescopic robotic arm devices of minimal transverse compliance and high length efficiency (ratio of the range L₂ to retracted height L₁), independent of extended length (zero to L₂) are achieved by deployment of a unique vertical telescoping structure that is horizontally movable from one connector track, through surrounding fibers and to another connector track under the direction of the KBS algorithm. The two-stage telescopic arm arrangement is based on chosen linear lengths of a vertical rectangular tube or "C" shaped outer body, with an internal slider body maintained in alignment by a unique sliding bearing carriage and spring preloading arrangement within the telescopic arm. The arrangement enables a constant length, flat, flexible electrical interface cable to be routed dynamically from the gripper mechanism to an external control system, which serves the dual purpose of pulling the internal sliding body so it moves in synchronism with the outer body. The robotic arm and gripper configuration is of very narrow width, enabling it to move unencumbered throughout the limited spaces in the fiber interconnect volume.

An automated cleaning device is further described, with the additional feature of integral sensing of the force on the cleaning fabric and polished fiber optic connector ferrule during cleaning. The electrical signal produced therein is utilized to provide feedback to accurately control the robot position and maintain less than a maximum value of compressive force at the fiber end face. This precise control ensures repeatable, high quality cleaning of the fiber end face, preventing the accumulation of particulates to thereby achieve consistently low insertion loss, high return loss optical connectivity, for superior quality and consistency compared to present manual processes. In the fiber cleaning subsystem, the cleaning fabric is fed from a supply spool through the cleaning cassette pad and onto a dispense spool. The arrangement enables multiple fibers to be cleaned from a single supply spool.

Stacked planar arrays of optical fiber take-up spools with fibers dynamically routed through a combination of eyelets, guides and rollers distributed in a precisely spaced geometry provide a source of low loss optical fiber connections between a fixed input array and a physically changeable output array. Each spool is independently tensioned to the degree necessary to retract any excess length of fiber between the internal one-dimensional backbone and two-dimensional output connector array, without subjecting the fiber to excessively sharp bends resulting from the controlled tension, such that the reliability and optical transmission characteristics of the fiber are not compromised. The present invention is also defined by the following numbered items:
**Item 1** A system for switching the position of any selected one of a multiplicity of optical fibers comprising:
   a number of two-sided optical couplers disposed in parallel rows in a coupling plane and spaced apart in the rows by a predetermined gap in a first direction, the rows being stacked orthogonally to the first direction to form columnar gaps, and a first side of the couplers each being individually coupled to a different fixed optical fiber line;
   a plurality of narrow elongated flexure elements, each attached adjacent and below a different coupler and extending perpendicularly for a selected distance from the coupling plane on the side opposite the fixed lines;
   a plurality of changeable optical fiber elements, each coupled at one remote end to a separate output circuit and including a narrow terminus configured to engage into the second side of any selected optical coupler and also including a flexure extension therefrom that is substantially coextensive when installed with the terminal length of the flexure element fixed thereat;
   a signal controlled fiber engagement device fitting within the pre-determined gap and responsive to command signals to control fiber engagement and lateral reciprocal shifting of an engaged fiber into and out of a selected coupler;
   a positioning system responsive to directional command signals and having an elongated extremity movable both within and outside the columnar gaps and coupled to control the position of the fiber engagement device relative to the existing pattern of optical fiber elements, said positioning system including a motor driven belt drive coupled to move the engagement device along the first direction axis and a separate motor driven telescoping drive movable parallel to the columnar gap, the telescoping drive including at least two stages comprising an upper hollow shell and a lower partially internal element slidable therein and having a low end terminus coupled to the fiber engagement device, and the telescoping drive moving both stages from the drive motor in a chosen proportionality; and
   a positioning control system providing command signals controlling the fiber engagement device and the positioning system.
**Item 2** A system set forth in item 1, wherein the narrow flexure elements have a length to width ratio of greater than 10 to 1, and the predetermined gap between the couplers and the flexure elements is at least twice as great as the width of the flexure elements, and wherein the changeable flexure elements extending from the changeable fiber elements have comparable total length dimensions in the attached flexure elements.
**Item 3** A system as set forth in item 2 above, wherein the narrow fixed flexure elements include a distribution of at least two small permanent magnets therein adjacent the free ends thereof, and the changeable optical fiber elements include one small permanent magnet positioned therein to interact with the magnets on the adjacent flexure elements when a changeable optical fiber elements is installed thereat, the polarities of the magnets being selected to provide magnetic attraction forces between the extremities of each adjacent pair and magnetic repulsion forces as to adjacent pairs of other flexure elements.
**Item 4** A system as set forth in item 3 above, wherein there are at least three such magnets on the flexure element, two spaced apart laterally on a terminal segment of the flexure element and a third being longitudinally closer to the opposite end of the flexure element to define a longitudinal engagement limit.
**Item 5** A system as set forth in item 1 above, wherein the telescoping drive comprises an upper linear element, namely the rectangular hollow housing, along a first axis perpendicular and adjacent to the rows of couplers, the housing having a narrow dimension fitting within the spacing between rows, the telescoping drive also comprising a lower linear element movable along the first axis within the upper housing, and wherein the telescoping drive further comprises a belt drive extension to and coupled to the housing and moving the housing vertically with respect thereof, and a cable drive including a pulley on the upper end of the telescoping drive and a cable having an exterior end fixed to an exterior point movable with the positioning system, and a cable interior end affixed to the lower linear element of the telescoping arm.
**Item 6** A system as set forth in item 5 above, wherein the telescoping drive further comprises internal resilient alignment guides slidably engaging interior side walls within the hollow housing coupled to the upper end of the lower linear element and coupled at an upper end to the lower end of the cable drive.
**Item 7** A system as set forth in item 6 above, further comprising a signal communication means comprising multiple parallel lines arrayed in a pliable band extending from a fixed point exterior to the hollow housing of the telescoping drive and via the interior of the telescoping drive to the fiber engagement device and wherein the lower element descends in the hollow housing solely by the force of gravity.
**Item 8** A system as set forth in item 1 above, wherein the fiber engagement device comprises a pair of parallel and adjacent planar devices in a vertical plane, first being coplanar with the second and coupled and oriented to descend from the positioning system into the space between adjacent flexure elements and adjacent the couplers in the coupling plane, the first planar device also including a signal controlled drive motor having a vertical drive shaft and responsive to control signals, the second planar device coplanar and adjacent the first, and including gripper means dependent therefrom for selectively engaging and inserting or removing an optical fiber with respect to an optical coupler thereat, the second planar device including horizontal shaft means spanning and extending through the first fixed planar device and terminally seated in the second planar device, and a drive coupling from the motor drive shaft extending horizontally from the drive shaft to couple on each side thereof in the second planar device.
**Item 9** A system as set forth in item 8 above, wherein the drive motor is a stepper motor and wherein the drive coupling is a drive filament wrapped around the motor drive shaft in a region intermediate its length to anchor points on each side, wherein the length of the filament including the intermediate wrapped portion is sufficiently longer than a tightly wound filament to allow an initial arc of rotary movement to avoid motor overload.
**Item 10** A system configuration for controllably switching interconnections between different individual ones of a multiplicity of different unchanging optical fiber inputs and selected individual ones of a multiplicity of changeable optical fiber outputs, wherein the inputs are distributed individually into a first side of two-sided couplers spaced apart in rows and columns disposed across an interconnection plane, the second sides of the couplers receiving changeable optical fiber outputs for signal interchange with an input signal at the first side thereof, wherein the changeable output lines are physically separate in an interchange volume proximate to the interconnection plane, and the system configuration comprises:
   a plurality of individual linear and narrow guide elements, each mounted in proximity to a different one of the two-sided couplers and each extending in parallel into the interchange volume for a predetermined limited distance;
   a plurality of individual and narrow line terminal elements, each of a length approximating that of the individual guide elements and including a different optical fiber with a terminus for engaging in the second side of an individual and different two-sided coupler in proximity to an individual and selected fiber output in the first side thereof;
   a transfer mechanism fitting within the horizontal spaces between vertical columns of fibers for engaging any selected terminal element adjacent the second side of the coupler thereof, said transfer mechanism including a two stage vertical positioner of less horizontal width than the spaces between columns, and
   a command system controlling the transfer mechanism in response to relocation instructions for changing the interconnection position of any selected optical fiber terminus in the system from a first fixed fiber at that coupler location to a second fixed fiber at a different coupler location.
**Item 11** A system as set forth in item 10 above, wherein the pluralities of guide elements and terminal elements each comprise narrow resilient metal lengths, including permanent magnet elements positioned at selected distances from the interconnection plane.
**Item 12** A system as set forth in item 10 above, wherein the transfer mechanism comprises a vertical drive system including a hollow outer upper body of rectangular shape and an inner body extending down from the lower end of the upper body and including a resilient sliding coupling therein between the adjacent ends of the two bodies for varying the vertical movement of the outer and inner bodies in a selected dimensional ratio in response to relocation commands.
**Item 13** A high capacity optical fiber switching system for selectively interconnecting individual input fibers to individual output fibers, comprising:
   a three dimensional distribution of paired linear elements of selected flexibility and length with a first element of each pair disposed in spaced apart horizontal rows and vertical columns defining a transverse interchange plane and each having a lower length extending for a selected distance perpendicularly in a first direction from the transverse interchange plane, including individual couplers distributed throughout the rows and columns to couple different signal conductors received oppositely therein, the paired linear elements each including a second, movable element including the terminus of a different chosen optical fiber in the switching system and engageable in any selected coupler in a position above and parallel to the lower element of the pair;
   an optical fiber engagement/disengagement transport device having a narrow horizontal dimension to be movable in horizontal space between any two adjacent columns in the distributed optical fibers, and including an axially movable gripper for selectively engaging the second movable terminus of a chosen optical fiber to transport the same to a different position; and
   a two-dimensional positioning system, coupled from above the transport device to the position of the transport device within the three-dimensional distribution in the spaces between columns, to selected row levels, the positioning system comprising coupled signal controlled and orthogonally related vertical and horizontal linear drives selectively and oppositely moving the transport device parallel to the columns and rows, the vertical drive comprising an upper hollow linear body fitting movably within the spaces between adjacent columns of fibers, a lower inner linear body slidably movable within the upper hollow body, and a motor driven cable drive coupled to move both linear bodies in a selected proportionality.
**Item 14** A system as set forth in item 13 above, wherein the paired linear elements have substantially greater length than width and each are of low magnetic permeability, and wherein the elements have selected longitudinal flexure properties and each includes permanent magnet elements spaced apart from the region of engagement to the coupler and within the boundaries of the linear element, the magnet elements having aligned positions and polarities selected to provide predetermined attraction and repulsion forces dependent on the physical juxtaposition of the paired linear elements.
**Item 15** A system as set forth in item 13 above, wherein the vertical linear drive further comprises an internal low friction guidance mechanism appended to the upper end of the lower linear body and contacting the inner wall of the upper hollow body, and the cable drive comprises a drive motor on the exterior of the two dimensional positioning system.
**Item 16** A system as set forth in item 13 above, wherein the engagement/ disengagement device further comprises a transport body that is narrow relative to the longitudinal axis of an optical fiber engaged thereby, and wherein the transport body includes a signal actuated drive providing two different states of engagement and one state of disengagement of an optical fiber in said device.
**Item 17** An optical fiber switching system for controlling interconnections between individual ones of a plurality of input fibers and selected changeable ones of a plurality of output fibers in response to command signals, comprising:
   a planar distribution of stacked rows of two-sided through couplers receiving individual fixed input fibers on a first side thereof for signal interconnection to individual changeable output fibers on a second side thereof, the couplers in the rows being separated by a predetermined first distance and the rows in the stack being separated by a predetermined second distance;
   a plurality of elongated narrow first resilient members of low magnetic permeability, each fixedly attached to a row of couplers immediately adjacent and below a different individual coupler and extending therefrom for a selected length providing more than a predetermined flexibility;
   a plurality of elongated narrow second resilient members of low magnetic permeability, each incorporating the terminal end of a different optical output fiber engageable in the second side of a chosen through coupler, the second resilient member further including an elongated body of low magnetic permeability and a length approximating that of the first resilient member;
   distributions of small magnetic elements on each of the first and second resilient members in patterns and polarities to define selected positional relationships thereupon;
   a fiber transporter having a lateral dimension of less than predetermined first distance between the couplers in the rows and including an actuable gripper mechanism for selectively engaging the terminal end of a selected optical fiber and moving it laterally to selectively engage and disengage a fiber in any selected through coupler;
   a signal controlled two axis positioning system responsive to command signals and movably mounted in the region of the output fibers on the second side of the planar distribution, the positioning system including a two stage vertical positioner coupled to and movable with a lateral positioner spaced apart from the planar distribution of stacked rows and both responsive to command signals, the vertical positioner comprising an upper hollow stage of predetermined height and a lower partially internal elongated stage coupled at its lower end to the fiber transporter, both stages being interconnected by pliant movable elements to move vertically in a chosen proportionality, and
   a command system for providing activating signals for one fiber transporter, the vertical positioner, and the lateral positioner.
**Item 18** A combination for precisely engaging the movable terminus of an optical fiber in a receiving operative device to couple optically with an optical fiber end therein, comprising:
   a union adaptor terminal device having a shaped aperture open in a direction to receive the end of a movable optical fiber, and including within the interior of the aperture, at a preselected depth from the aperture, the contactable end of an interior optical fiber;
   a first elongated resilient member of selected length fixedly attached at one end to the terminal device adjacent to the shaped aperture, said member having a bifurcated free end of selected length;
   a set of small permanent magnets coupled to the first member in the free end area thereof at different lengthwise spacings from the attached end thereof, including magnets of like polarity on each of the bifurcated ends, and at least one of opposite polarity adjacent the bifurcated end;
   a second elongated member of length approximating that of the first member and including a connector body extending lengthwise there along, and an optical fiber therein, including a fiber coupling open to an exterior unit on one end and a ferrule configured to engage in the shaped aperture on the other end, and
   a small additional permanent magnet coupled to the second member along the length thereof, at a spacing from the ferrule to intersect with at least one of the set of magnets on the first member when the second member is engaged.
**Item 19** A combination for precisely engaging the terminal optical fiber sections as set forth in item 18 above, wherein the magnet on the second member is positioned such that it is between and of opposite polarity to the magnets of like polarity thereon in an "unallocate" position of the second member to the first member, and in contact with and held by magnetic force against the third permanent magnet on the second elongated member in an "allocate" position.
**Item 20** A combination in which small elements with a degree of flexibility are to be precisely aligned in automatically effecting an insertion operation, comprising:
   a first non-magnetic linear base element having a predetermined length and cross-sectional dimensions to bend in response to pre-selected levels of magnetic force, on a free end thereof when the opposite end is restrained against movement, said base linear element including a bifurcated free end section;
   a set of small permanent magnets mounted on said first base element in the free end section thereof, one each of a first polarity alignment on the bifurcated free ends, and a third of opposite polarity on an adjacent section of the first base element;
   a retainer unit coupled to said opposite end of said base element and including means for receiving a second linear end in parallel relation, and
   a second linear element of approximately the same length as said first linear element, said second linear element being engageable to different depths of insertion into the retainer unit in adjacent parallelism to the first base element, and further including a small permanent magnet positioned to interact with the permanent magnets on the first base element when the second linear element is engaged in operative position.
**Item 21** A configuration for a fiber optic system which changes individual interconnections between a first plurality of fixed inputs each separately engaged in one side of a two-sided coupler disposed in a two-dimensional planar distribution of a plurality of rows and columns, and a second plurality of variable inputs engaged in the second side of the individual coupling wherein the system configuration comprises:
   a plurality of like members laterally stacked in parallel horizontal rows and each including a pre-determined number of spaced apart fiber optic interconnection couplers along their length which are configured to receive fixed external inputs on one side and changeable internal outputs on the other, said inputs and outputs each transferring optical signals between pairs of fiber optic elements therein, and said lateral members each including a predetermined number of narrow elongated elements of predetermined like length and selected flexibility extending perpendicularly therefrom at a selected lateral spacing between adjacent parallel elements, corresponding to the spacing between interconnection couplers, and
   a plurality of elongated optical fiber terminating elements, each having an individual length substantially corresponding to that of said individual elongated members and each comprising the free end of an individual optical fiber in the system, and sufficiently narrow along its length to be transportable therewith transversely through the transverse spacings between existing optical fiber optic interconnection members in the system.
**Item 22** A controllable optical fiber routing system for individually shifting the first ends of any of a multiplicity of optical fibers which are in a three dimensional array which routes signals from individual interior sources through a two-dimensional distribution of changeable first ends to a planar distribution of invariant second ends, wherein the system arrangement for manipulating the changeable first ends comprises:
   an input array of throughput couplers for optical fiber terminals from an external system distributed in a vertical stack of horizontal rows of equally spaced elements, each adapted to receive an external unchanging optical fiber input on a second side thereof and receiving a changeable optical fiber input on the first side thereof from the three dimensional array in conductive contact relationship with the optical fiber on the second side;
   a first multiplicity of elongated narrow elements of selected length and resilience, each attached individually to a different horizontal row element in the input array in predetermined spatial relationship to a different individual through-put coupled therein, and also oriented with its axis of elongation perpendicular to the horizontal row element, each said element having cross-sectional dimensions such that a transverse gap exists between elements that is substantially greater than the width thereof, and
   a variable second multiplicity of elongated movable elements, each individually vertically adjacent a different element of the first multiplicity having lengths and cross-sectional dimensions approximate those of the first multiplicity, and comprising also the free interior ends of a different one of the multiplicity of optical fibers in the array, said free ends being configured to register removably in the individual throughput coupler of the input array at that position in contact with an external fiber therein.
**Item 23** A positioning mechanism for controllably engaging and disengaging individual changeable selectable ones of a plurality of optical fiber terminals on one side of each terminal in a two dimensional matrix of two-sided terminals, the opposite sides of which couple to predetermined optical lines on the system, wherein a two-dimensional terminal matrix is disposed in horizontal rows and vertical columns having predetermined limited spaces therebetween, and wherein the system comprises:
   a command subsystem for directing the positioning mechanism to a selected row and column position in the matrix to change from the original position of the optical fiber thereat to a selected different position;
   an optical fiber receiving element operatively movable by the positioning mechanism to a selected row and column position in the matrix, said receiving element being operative to engage the terminus of an optical fiber lying perpendicular to the matrix and in alignment therewith;
   a mechanical position allocation system for transporting a selected individual optical fiber in the receiving element to the chosen engagement relationship via movement through the two-dimensional matrix of rows and columns of terminals, wherein said mechanical position allocation system comprises a first planar body of narrow width in the columnar direction and descending vertically from the positioning mechanism, and a second planar body parallel to the first planar body and slidable along parallel shafts fixedly coupled in spaced apart regions of the second planar body, for providing relative movement therebetween;
   a horizontal actuator mounted on the first planar body and coupled to move the second planar body to selected linear positions relative to the optical fiber receiving element, and
   an optical fiber engagement device descending from the lower one of the parallel shafts and responsive to the command system to engage the input optical fiber when in position at the selected terminal.
**Item 24** A system for accessing and controlling engagement of individual optical fibers in an array distributed in parallel in closely spaced but separated columns and rows to terminate at a planar distribution of individual connectors accessible from a common input exchange side, including an optical fiber positioner sized to be movable within the inter-columnar spaces, and coupled to the descending end of a processor controlled access system for locating the positioner at a selected row and column in the array, and comprising:
   first and second planar members fitting in adjacent relation within the inter-columnar spaces between the fibers in the array, the first having a partially superior position coupled to the descending end of the access system and extending vertically down to and including a fiber gripper guide slidably engaging a target fiber, the second planar member having parallel upper and lower translation shafts coupled at their ends to the first planar member intermediate to said ends, and extending in sliding relation through the first planar member;
   a belt drive mounted on the first planar member and including driven rotatable members on opposite sides of the second member relative to the first planar member; and
   a motor responsive to command signals and operating the cable or belt drive to place the second planar member and the fiber in a selected linear position.
**Item 25** A positioning system in which external spaced apart elements are mounted on shafts slidable in a fixed mechanism having a motor drive for translating the external elements between different positions, a combination comprising:
   a support structure serving as a physical reference for the positioning system;
   a stepper motor drive responsive to command signals and mounted on the support structure and including a drive capstan rotatable about a first axis;
   at least a pair of parallel bearing shafts slidably engaged in spaced apart relation in the support system along axes which are perpendicular to the first axis, the bearing shafts having like lengths which extend at both ends beyond the support structure;
   a pair of spaced apart terminal blocks fixedly mounted on the opposite extending ends of the bearing shafts to define an operative positioning zone there-between that spans the drive capstan, and
   a length of drive filament or cable wrapped at least once around the drive capstan and extending at each end between the bearing shafts to a fixed attachment point at a different terminal block, the drive filament length being selected with respect to the length of span between the terminal blocks and the circumferential wrap about the drive capstan to provide a selected acceleration arc for the drive capstan in moving the terminal blocks to avoid motor stall.
**Item 26** A signal responsive positioning device for vertically translating a relatively small operative unit to a target location in the vertical dimension in a desired horizontal space, comprising:
   an outer vertical robot arm of hollow substantially rectangular cross-section and small dimension relative to its length;
   an inner vertical robot arm slidable within the cross section of the outer arm and extending from the bottom thereof, the lower end of the inner robot arm being coupled to position the operative unit;
   a cable drive system including a control signal responsive drive motor vertically movable on the outer robot arm and including a fixed length cable coupling between a stationary y position and the inner robot arm, such that the inner arm moves at twice the distance of the outer robot arm; and
   a flexure system in the upper portion of the outer robot arm coupling the inner vertical arm to the outer arm, the flexure system comprising pairs of vertically displaced interior flexure elements engaging the inner walls of the outer vertical arm and including a pair of flexure elements coupling the internal elements.
**Item 27** A signal controllable system for positioning an optical fiber terminal within a handling device in a vertical dimension in response to control signals, comprising:
   a linear elongated hollow vertical body having a rectangular cross-section and a preselected length which is less than a required vertical span;
   a linear slider member movable within the hollow body along the vertical axis and extending from the lower end thereof;
   a mechanical drive coupling between the slider member and the vertical body for moving the slider member device twice the distance of any linear motion imparted to the vertical body to provide a desired total vertical span, and
   a servo motor drive coupled to the vertical body and responsive to control signals to controllably change the positions of the vertical member and slider member.
**Item 28** A system as set forth in item 27 above wherein the drive coupling comprises a rotatable member attached to the upper end of the vertical body and a cable having an externally fixed first end, the cable being curved over the rotatable member and having an end fixed to the top of the slider member.
**Item 29** A combination for monitoring the status of individual ones of a number of individual reels of signal communicating optical fibers as the reels are varied in azimuthal angular position during a data processing operation, comprising:
   a plurality of rotatable reels, each circumferentially receiving a different optical fiber whose positional status is to be monitored and each including a circumferential element allowing a selectively variable length of the optical fiber to be withdrawn under tension, each reel further including a predetermined, repeated pattern of circumferential indicia segments on the periphery thereof;
   a plurality of individual light sensor devices, each adjacent a different individual one of the rotatable reels and positioned to sense the peripheral circumferential segments thereon and generate an individual signal in response thereto;
   a multiplexer circuit controllably responsive to any selected one of the plurality of individual signals from a different light sensor device for delivering output signals denoting the positional status of the selected individual reel; and
   command circuits for generating monitoring requests and operating the multiplexer to select a particular output signal from an individual one of the light sensor devices to monitor the change in positional status of the chosen reel.
**Item 30** A combination as set forth in item 29 above, wherein the rotatable reels each comprise a like number of circumferential arc segments regularly spaced around the periphery of the reel and the light sensor devices further comprise a compact light emitter and an adjacent light sensitive transducer positioned to provide a signal varying with the circumferential position of the associated reel, and wherein the combination further comprises elements in the command circuits for monitoring the reel status from the circumferential position signals.
**Item 31** An optical fiber end face cleaning system for use in a system controlling a multiplicity of optical fibers to couple the end faces of selected fibers to chosen terminals, comprising:
   a positioning device controllably securing the exposed end of a selected optical fiber and moving the exposed end along a selected axis in engage and disengage directions in response to command signals;
   an optical fiber end face cleaning structure positionable transversely adjacent the exposed end of the optical fiber, the cleaning structure comprising a planar, composite areal sensor structure normal to the axis of the exposed fiber end, wherein successive planar layers of sensor structure, from the exposed fiber end, comprise a fiber end face cleaner fabric layer, a compliant pad, a compression force responsive device, and a planar support layer;
   the cleaning structure further comprising a positionable support unit for the cleaning structure;
   control circuits coupled to the positioning device and the cleaning structure for moving them into engagement to a selected force level, the control circuits including means responsive to the signal from the compression force responsive device and circuits controllably terminating engagement of the cleaning structure against the positioning device when the selected force level has been reached.
**Item 32** An optical fiber cleaning device for use with a fiber transport head operating in a multi-fiber system, wherein the transport head positions the exposed terminus of an individual optical fiber perpendicularly against a cleaning surface, comprising:
   an optical fiber cleaning surface support body positioned to intercept perpendicularly the terminus of an optical fiber to be cleaned and including a base structure with a reference face normal to and spaced apart from the terminus of a fiber to be cleaned;
   a compliant pad of chosen thickness and areal dimension positioned against the reference face of the support body and normal to the axis of a fiber to be cleaned;
   a planar force sensor element disposed within or on the compliant pad to intercept the terminus of a fiber to be cleaned, the sensor having a thickness in the range of 0.25 to 0.5 mm. and a sensing region no greater than about 10 mm in diameter;
   a cleaning fabric element adjacent and coextensive with the planar force sensor element, for receiving contact from the terminus of the fiber being cleaned;
   a force sensing circuit coupled to the sensor element and including a voltage divider having a target force sensing threshold of about 100 gm-f and a reference resistor of about 1 MΩ, and an analog to digital converter providing a digital output signal; and
   digital circuits responsive to the digital output signal for terminating the operation of the cleaning device when the force exerted reaches a predetermined limit.

### BRIEF DESCRIPTION OF THE DRAWINGS

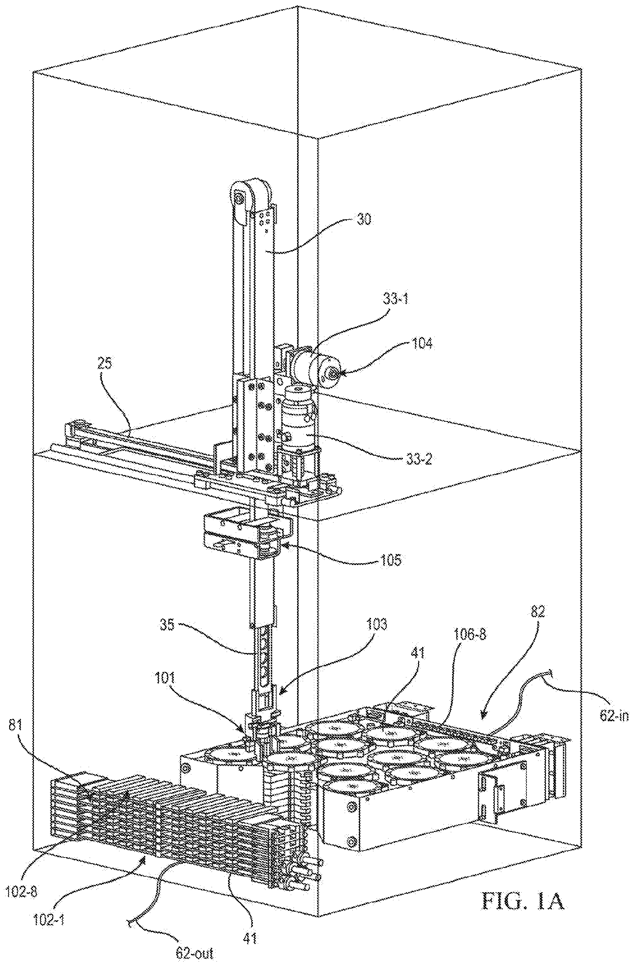

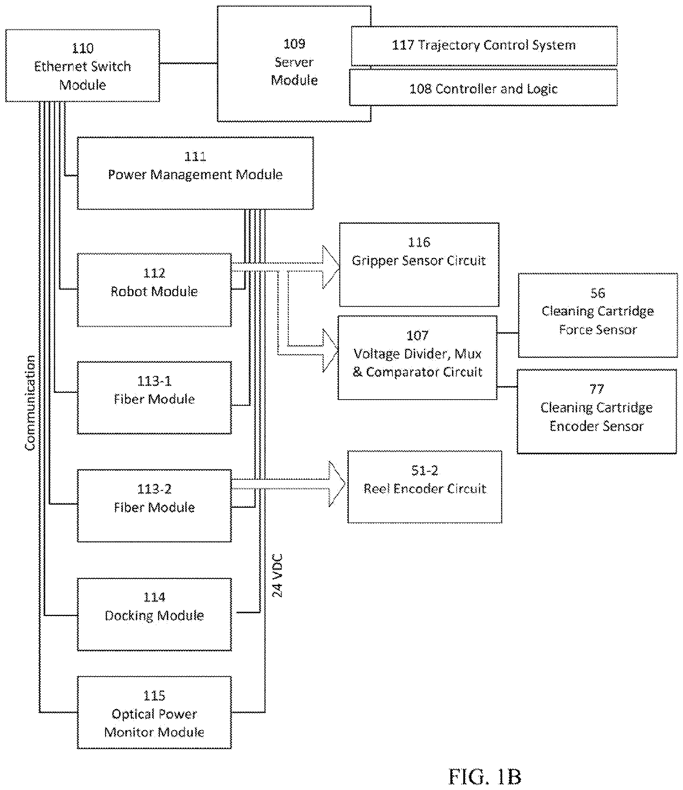

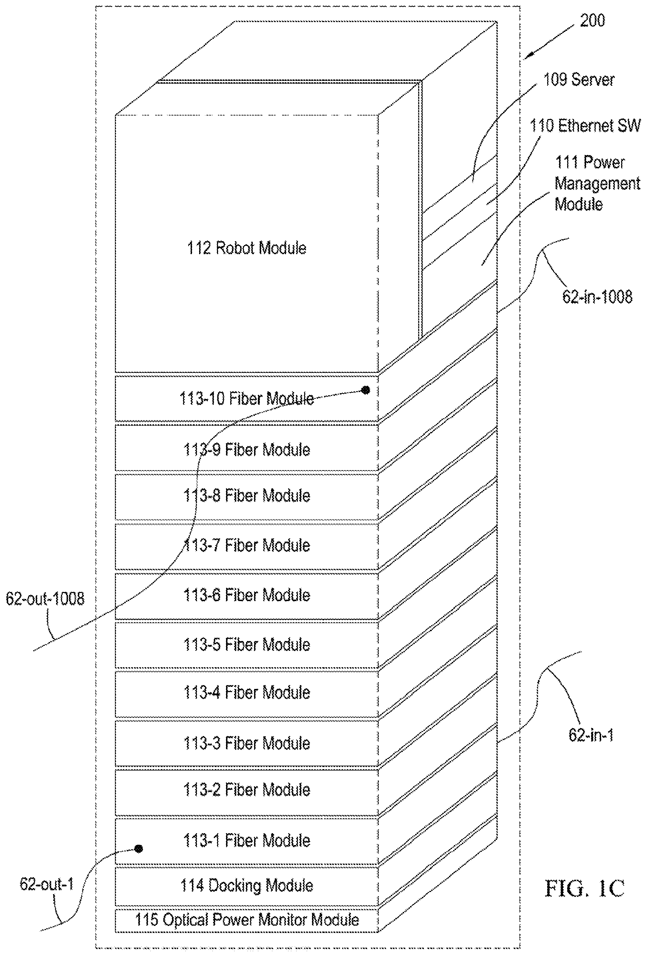

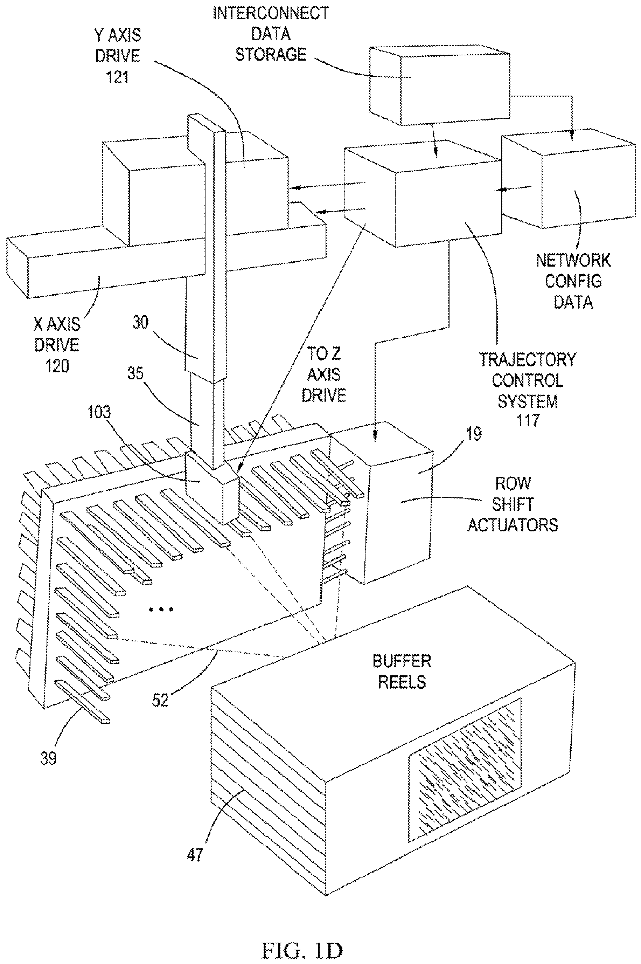

Figure 1A depicts the arrangement of a number of significant functional elements comprising a robotic fiber optic cross-connect system in accordance with the present invention, populated with one set of eight rows and with capacity for adding more rows both below and above those eight rows as depicted; Figure 1B is a block diagram of other inventive combinations in accordance with the invention; Figure 1C is a simplified perspective view illustrating the arrangement of interrelated modules, and Figure 1D is a block diagram of some interrelated system elements in accordance with this invention;
Figure 2 depicts a fragmentary view of the magnetically latching internal fiber optic connector in accordance with the invention, including its features for interfacing and mating within the robotic gripper, its relationship to a connector row for receiving and holding the connector, and a side detailed view of the resulting magnetic repulsion forces between connector rows;
Figure 3 is an interior view of a stacked arrangement of eight connector rows, forming a stackable module of 96 fiber optic ports with means to magnetically engage fiber optic connectors transported thereto by the gripper, further illustrating the relationship between the connector magnet and the connector row magnets with a tristate configuration;
Figure 4 illustrates an exterior view of the same stacked arrangement of eight connector rows, producing the two dimensional array of fiber optic ports to which external cables requiring cross-connections are plugged in;
Figure 5 is a side view of a gripper device in accordance with the invention, with fiber optic connector in the allocate configuration detailing the numerous positional sensing and actuation means;
Figure 6 is a side view of the gripper device in the unallocated configuration;
Figure 7 is a side view of the gripper device in the unplug configuration;

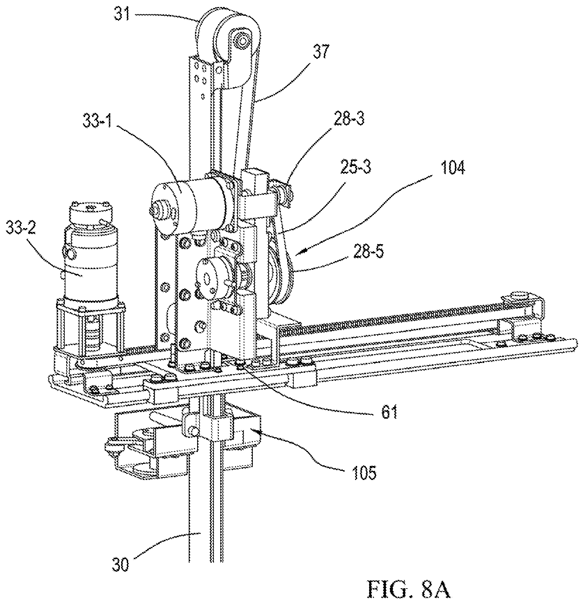

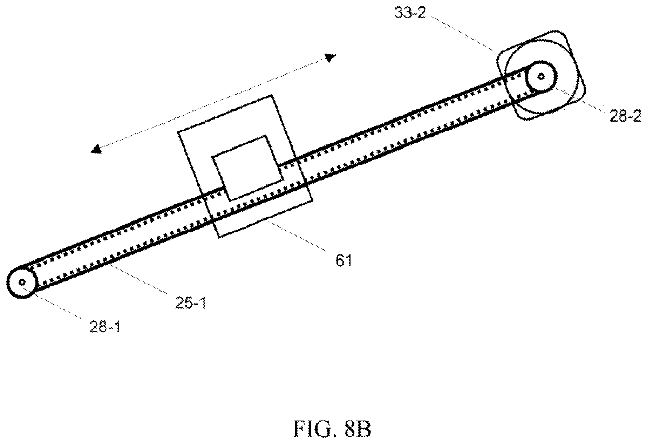

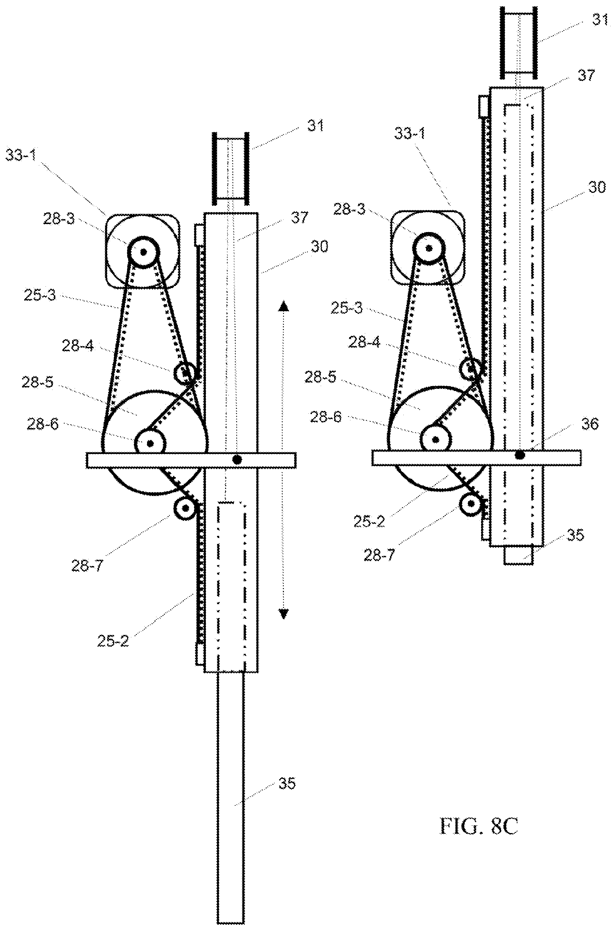

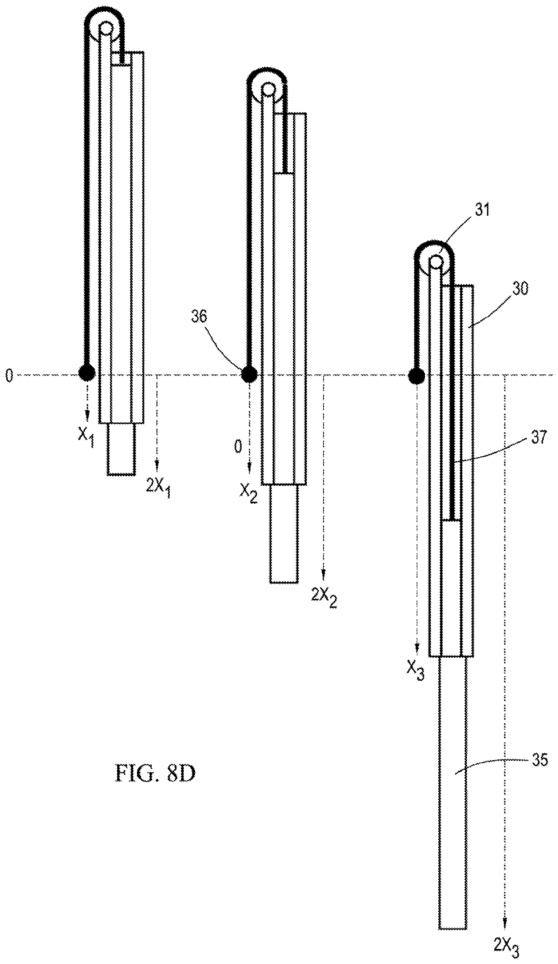

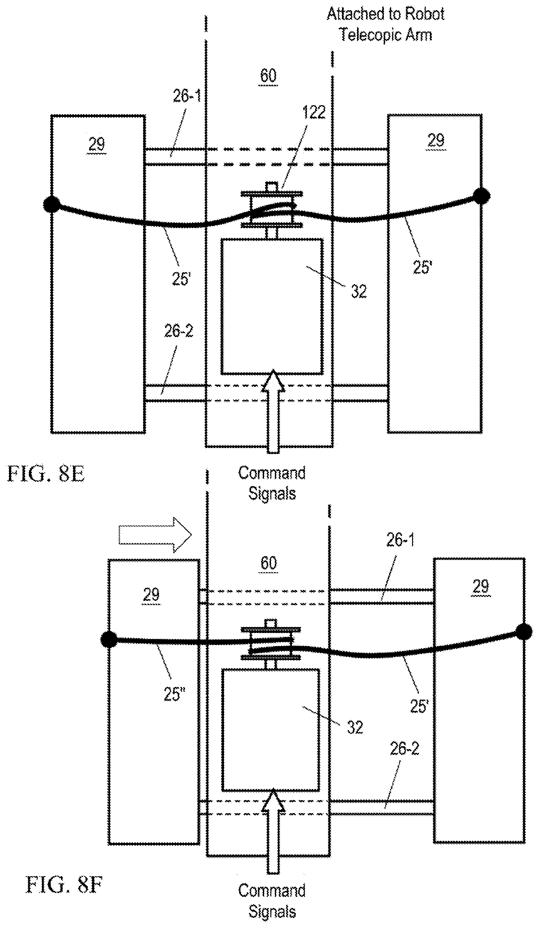

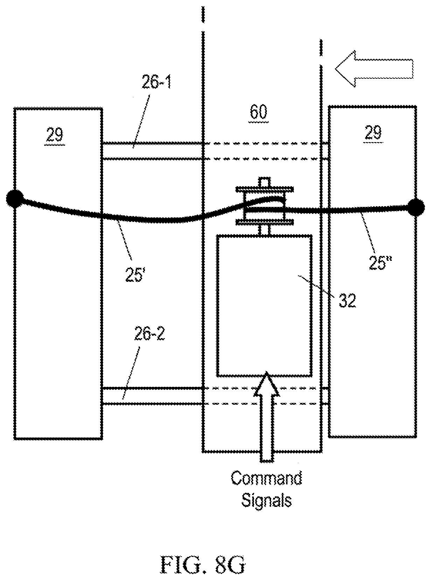

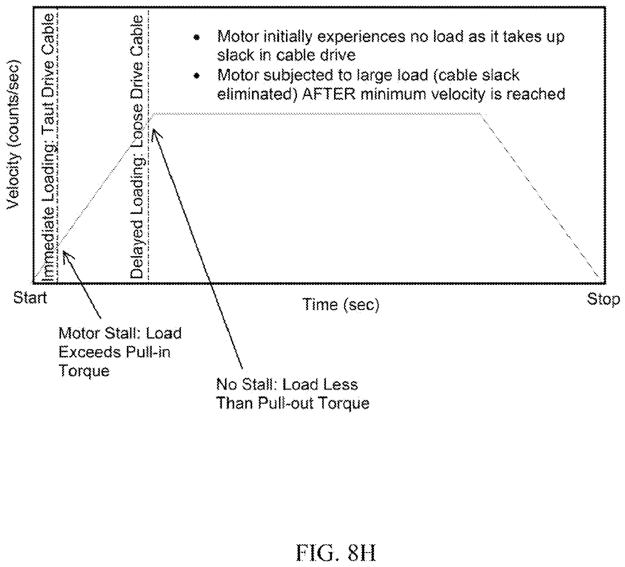

Figure 8A is a partial, perspective view of a two-axis robotic actuation system in accordance with the invention, which moves a gripper mechanism within the internal fiber cross-connect volume; Figure 8B is a schematic view of an x axis drive mechanism; Figure 8C is a schematic view of a y axis drive mechanism; Figure 8D is a schematic view of the y axis drive in various extended states; Figure 8E illustrates the gripper z axis drive mechanism in central position, Figure 8F in left position, Figure 8G in right position, and Figure 8H illustrates the velocity trajectory of the gripper stepper motor actuating the z axis drive;
Figure 9 is a further perspective and diagrammatic view of actuation system of Figures 8A-8C, depicting the gripper at the end of a two-stage telescopic arm in the fully extended state;
Figure 10A is a partial view of the two-stage telescopic arm in the partially extended state, Figure 10B is a partial breakaway view of the vertical portion of a telescopic arm in the substantially retracted range of travel, and Figure 10C is a perspective view, also partially broken away, of different segments of the telescopic arm in the substantially extended range of travel;
Figures 11A and 11B are top perspective views of an improved fiber take-up tray for fiber tensioning and dynamic slack fiber management, each including twelve individual reels and fiber guides facilitating low loss, dynamic optical fiber routing therebetween to the central backbone, depicting the portion of fibers in front of the backbone in Figure 11A and the portion of the fibers in back of the backbone in Figure 11B;
Figure 12 is a perspective view of a portion of the stacked arrangement of multiple fiber take-up trays, detailing the routing of optical fibers from individual reels to the central backbone through low friction o-ring shaped eyelets and soft rubber-clad rollers;
Figure 13A is a partial cutaway perspective view of a portion of the optical fiber reel system including sensing electronics to detect the rotation of the reel during dynamic reconfiguration such that proper fiber slack management can be validated, Figure 13B is a block diagram of a subsystem for processing the electronic signals from the sensing electronics to establish proper system response to reel position commands;
Figure 14 is a first partial cutaway perspective view detailing a part of a gripper device and the cleaning cartridge, and in accordance with the invention, showing a force sensor integral to a fiber end face cleaning device in operative position;
Figure 15 is a second partial cutaway view of the operative side of the fiber end face cleaning device of Figure 14 in operative position relative to the gripper device; and
Figures 16A and 16B are partial cutaway bottom and top views respectively, of the fiber end face cleaning device, as depicted generally in perspective views of the system such as Figures 1, 9 and 10A, and showing a number of advantageous operative features therein.

### DETAILED DESCRIPTION OF THE INVENTION

### I. ROBOTIC CROSS-CONNECT SYSTEM

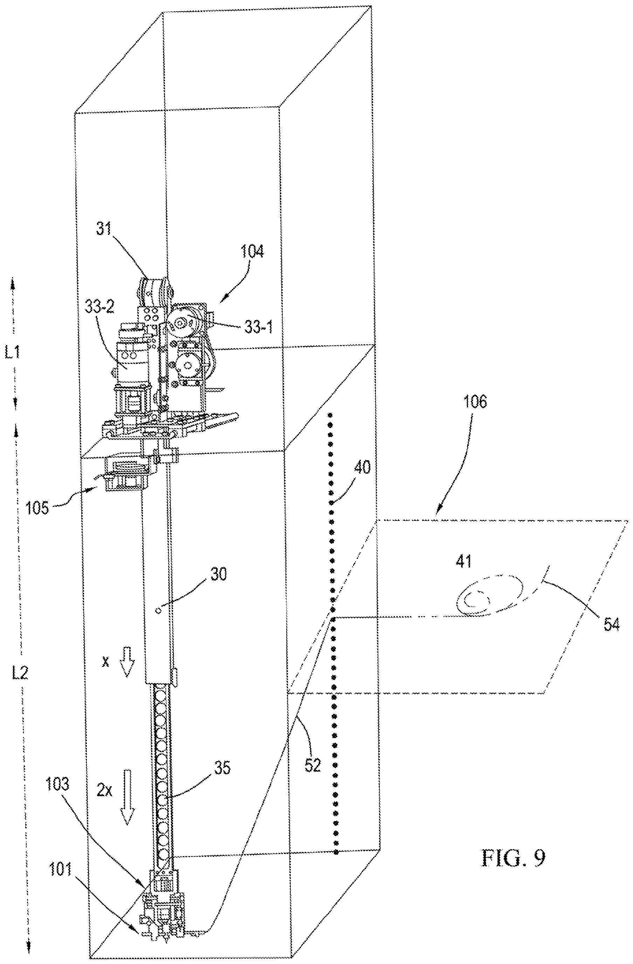

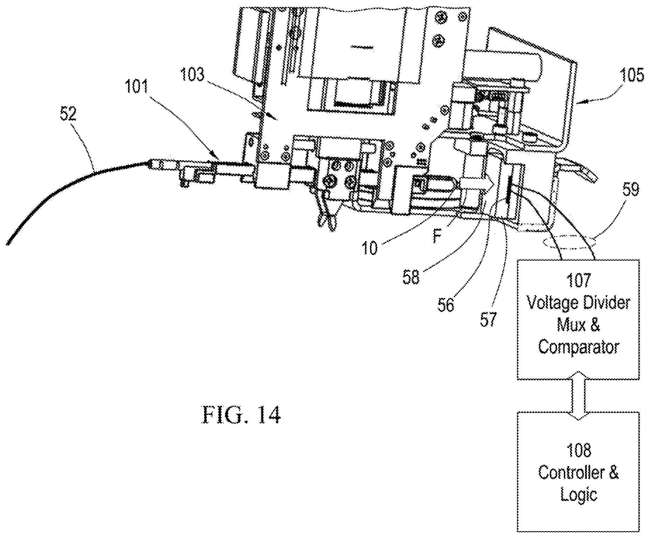

This application discloses robotic cross-connect systems providing low loss, software-defined fiber optic connections between a large number of pairs of ports. The number of ports typically ranges from 48 x 48 up to 1008 x 1008 and beyond. Figures 1A-1D illustrate a number of principal aspects of this system, comprised of a robot module **112** including a telescopic robot arm assembly **104,** a fiber optic connector end face cleaning module **105,** a miniature actuated gripper **103,** a stacked arrangement of connector rows **102-1** ... **102-N,** and a stacked arrangement of fiber take-up reel trays **106-1** ... **106-N.** Groups of connector rows **102-1** ... **102-8** further comprise the front actuated patch-panel of fiber module **113.** The gripper **103** is able to unplug any fiber connector **101-n** from among the array of fiber connectors inserted along the connector rows **102,** then transport it in a deterministic, optimal weaving pattern between the surrounding fiber connectors of the array upon manipulation by the robot arm assembly **104.** The process of transport thus includes a coordinated, sequential, multi-step movement of the robot and programmatic shuffling of each connector row **102** in accordance with the KBS algorithm as described in U.S. Patent No. 8,463,091 referenced above. Before plugging in the fiber connector **101-n** to its chosen final port **55,** the polished fiber end face of fiber connector **101-n** may be cleaned by the fiber end face cleaning module **105** as shown generally in Figs. 1 and 9 and described in detail below with respect to Figs. 14 to 16B. The fiber connector **101-n** terminates the internal optical fiber **52,** wherein this optical fiber originates from an automatic, spring loaded take-up reel residing within the multiple take-up reel tray **106.** The take-up reels ensure that all internal optical fibers are maintained under slight tension in the fiber interconnect volume between the connectors **101** and the take-up reels so that they follow substantially straight-line paths for all possible arrangements of connectors **101** within ports **55.** Straight-line paths are efficiently represented mathematically and facilitate the routing by the KBS algorithm as described in the above referenced patents.

In reference to the block diagram in Figure 1B and the perspective views in Figures 1C-1D, the KBS algorithm is implemented in software instructions residing on server **109** and communicating in parallel with each Fiber Module **113-1** ... **113-10,** Docking Module **114,** Optical Power Monitor Module **115,** Robot Module **112,** and Power Management Module **111** through the Ethernet Switch **110** and by use of the Ethernet protocol TCP/IP. In a further example, each module is powered by 24 VDC, which is supplied by a power distribution bus in the Power Management Module **111.** The Robot Module **112** is in communication with a Gripper Sensor Circuit **116** to detect the operative state of the fiber connector in transport, as well as a comparator circuit for a force sensor **56** (e.g. a thin film resistive sensor) integral to the cleaning cartridge. The fiber modules **113** each are in communication with a multiplexed array of reel encoder sensors responsive to the rotation of any particular take up spool **41,** the rotation resulting from internal fiber length changes due to movement of the internal fiber connector.

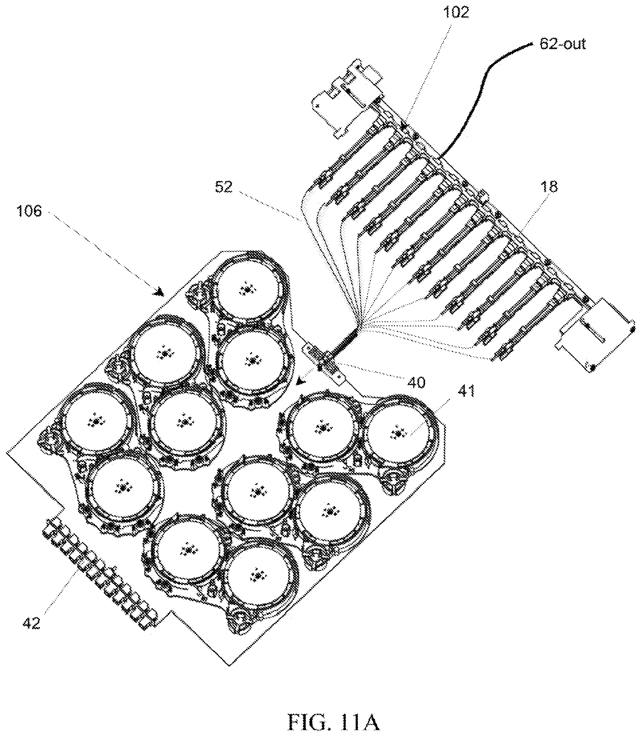

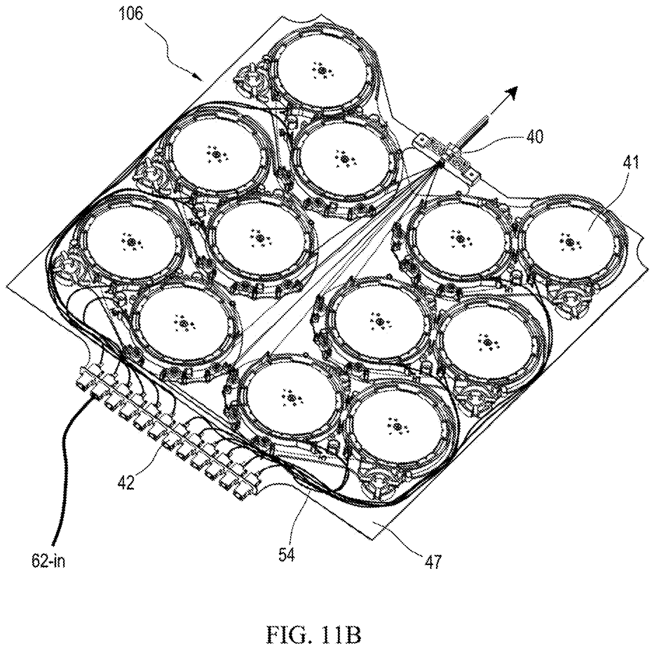

Figures 1A, 1B, 1C further depict details of the integrated and cooperative relationship between several novel operative parts of this system, which further extend the art of automatic switching of selected ones of a plurality of optical fiber lines, as described in the above-referenced Telescent patents. Inputs to the system comprise a plurality of lines **62-in** (Figs. 1A and 1C) distributed in ordered columns and rows fed into one side of each individual one of an array of output couplers **18,** and are connected with low loss internal fiber connectors to an opposing array of input couplers **42,** and connected to a plurality of lines **62-out** at the opposite side of the system **200.** The individual rows are separately incrementally shiftable laterally by one of a stack of row shift actuators in accordance with the fundamental Knots and Braids methodology (referenced above). Changeable lines **52** are coupled into the second side of the individual couplers **18** and these lines converge into a one dimensional alignment at backbone **40** and are then distributed into ordered levels of multiple buffer reels **41,** as described below in more detail in relation to Figs. 11 to 13. These reels **41** compensate for path length variations as internal fiber **52** positions and their corresponding suspended lengths are changed, without introducing curvatures in the optical fibers that are so sharp and non-adiabatic that they would introduce light loss at bends. From the assembly of buffer reels **41** the fiber pattern is reconfigured, typically into an array of linearly disposed output couplers or receptacles **18,** which can then be retransmitted or otherwise reconfigured as desired.

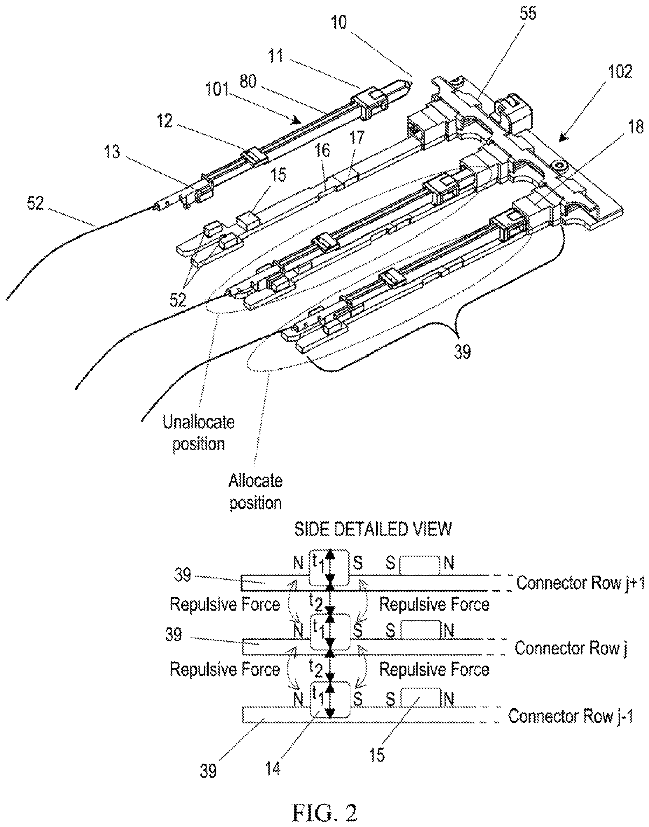

Given this context, some principal aspects of the present invention that are also shown in generalized form in Fig. 1A (although shown and discussed in more detail below) further establish the internal cooperative relationships in form and function. For example, the arrangement of rows and columns of two-sided couplers in the connector assemblies **102** provide signal interchange between lines from opposite sides. On the internal, changeable side, the structures comprise individual linear fixed elements of predetermined length, cross-sectional configuration and flexibility. Each of these fixed elements also supports a pattern of small permanent magnets within its boundaries and adjacent its internal end as described in detail below with reference to Figs. 2 to 4. In combination with this, each changeable optical fiber **52** in the system terminates in a connector assembly **102** of approximately matching length for coupling to any individual fixed element **63** with which it is to be paired. When a terminal protruding end of ferrule **10** of the optical fiber **52** is inserted in the individual union adapter **18** of the connector row assembly **102,** an individual changeable optical circuit is completed. Together with a number of features described in detail hereafter, that pertain either or both to design and operative relationships, this concept and its implementation are unique.

Interrelated functions are provided in the system that pertain to the engagement and disengagement actuation operation as well as to the interchange of fibers to and from the couplers. Two different states of linear engagement and a related state of disengaged physical proximity are utilized, as is described in more detail below. These states are effected during a linear alignment phase independently of the repositioning of fibers by interweaving through the columns and rows as described in detail in the previously referenced patents.

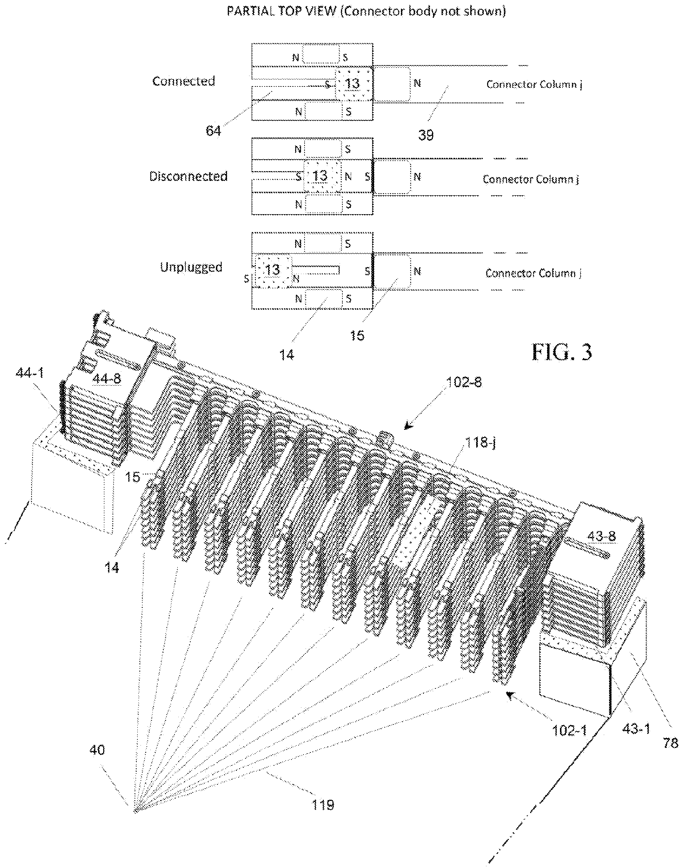

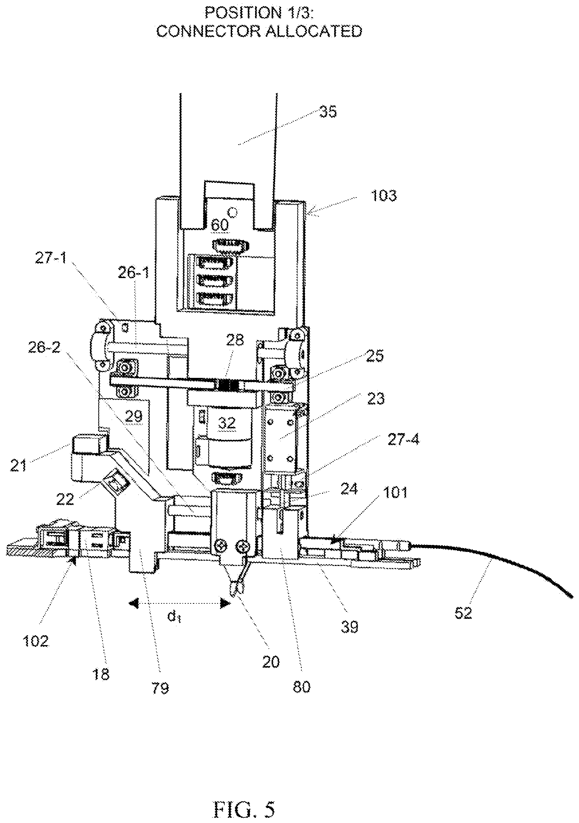

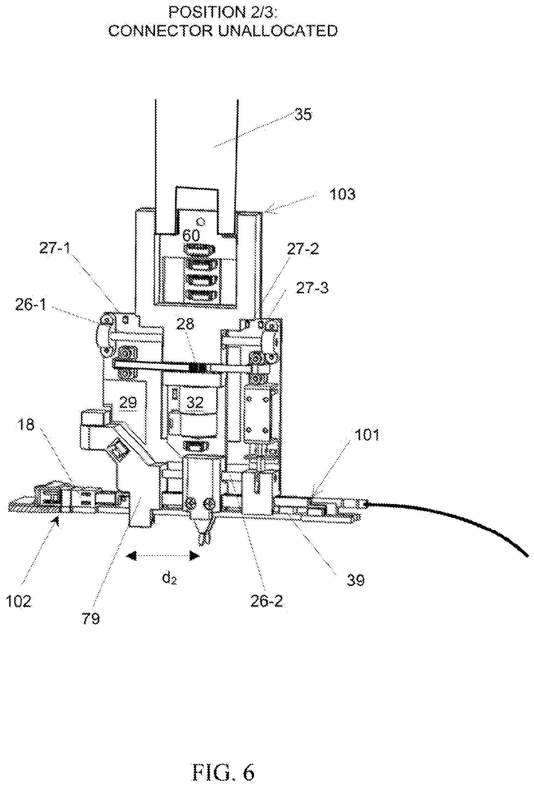

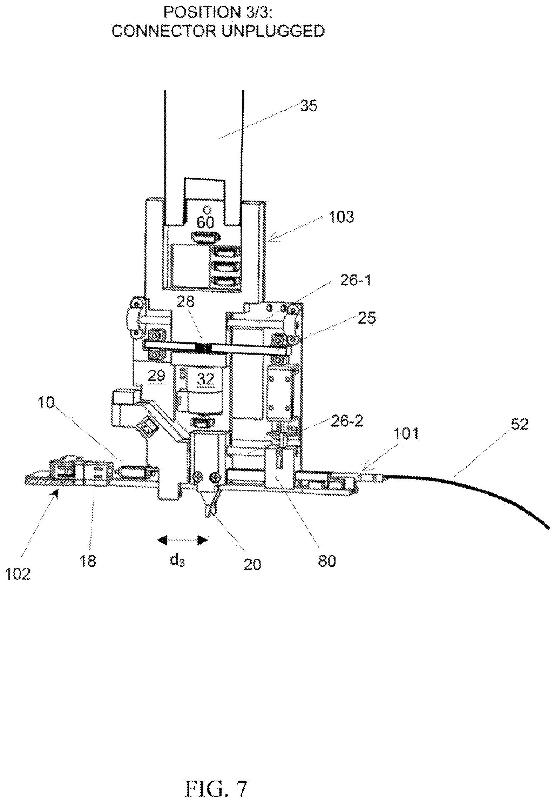

These as well as other functions are effected by commands from a trajectory control system **117** (Fig 1B) which receives cross-connect configuration information from a server **109,** and a source of updated data, based on stored interconnection data from a memory system in server **109** holding updated data. Again, reference may be made to the patents mentioned above for a full understanding of the elements and relationships that are germane to positioning of the gripper assembly **103.** These movements are substantial in orthogonal X and Y directions and also incremental in the Z dimension under commands to the activator **103** from the trajectory control system **117.** For these functions the system **200** deploys a vertical multi-stage head positioner controlling movement in the Y axis, comprising a narrow rectangular hollow upper stage **30** inside of which a linear and narrower lower section **35** slides by spring-loaded rollers in a proportional ratio. Both receive command signals from the trajectory control system **117,** and are driven by a Y axis drive **33-1,** typically a brushless dc servomotor or stepper motor, responsive to command signals from the server **109.** The Y axis stages **30, 35** are moved horizontally as command signals are delivered from the trajectory control system **117** which activates the X axis drive **33-2.** Most of this mechanism is positioned above the fiber interchange matrix, while the narrow fiber interchange head **103** discussed in detail below (Figures 5-7) is movable vertically in the spaces between the vertical column j of fibers **52** and indicated by **118-j** in Figure 3. The horizontal rows **102** of the interchange matrix are selectively moved incrementally in a first horizontal direction or oppositely during threading through the matrix. When the activated head **103** reaches a target location in **102** it can be moved incrementally along the Z axis to couple or decouple a target fiber connector **101** to the selected one of the target couplers **18.** Also, along the Z axis, it can shift the target connector incrementally between "allocate," (Figure 5) "unallocate," (Figure 6) and "unplugged" (Figure 7) positions. The corresponding magnet interactions between the connector **101** magnet **13** and to row magnets **14, 15** are noted in Figure 3.

### II. TWO DIMENSIONAL ARRAY OF SWITCHABLE, MAGNETICALLY LATCHED, MULTI-STATE FIBER OPTIC CONNECTORS

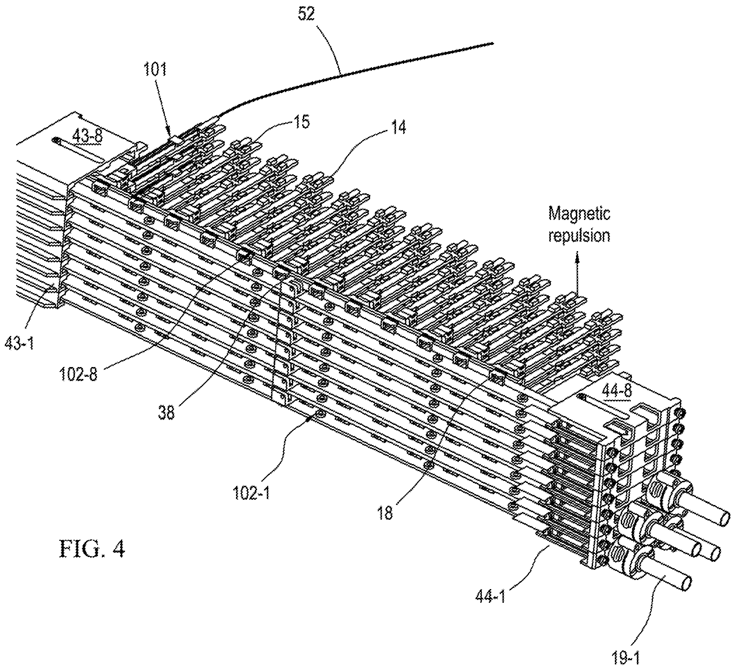

This application further discloses a multi-dimensional array of connector devices **101** arranged in incrementally shiftable vertically spaced rows **102** (Figs. 2-4) disposed in generally horizontally aligned columns as best seen in Figs. 3 and 4. The horizontal rows, as best seen in Fig. 2, comprise a plurality of spaced apart parallel base elements each fixed at one end to a different union adapter **18** which is to receive the terminal ferrule **10** of a different and changeable fiber optic line **52.** Thus the array in part comprises, as seen in the perspective views of Figs. 1A, 3 and 4, a plurality of horizontally spaced fixed elements **39** of selected flexibility and substantial length relative to their width and cross-sectional area. They are each fixedly attached at what can be called a receiver end to the transverse connector row assembly body **102,** and thus provide parallel interactive elements for receiving the individual fiber optic connectors **101.** These fixed elements **39** have a length to width ratio of greater than 10:1, and are of substantially less height than width so they have resilience in a selected range, and no or low magnetic permeability, since magnetic forces are to be used for specific deflection purposes therewith, as described below.

Each optical fiber **52** in the system terminates in an elongated connector **101** leading to a ferrule **10** that engages in the union adapter **18.** When fully inserted, the optical fiber terminus **10** is in physical and optical contact with an external fiber terminus pre-existing in the opposite side of the coupler formed by the adapter **18** and in parallel adjacency to the fixed element **39.** As seen in the three different and adjacent insertion positions for the fiber ferrule **10** depicted in the partially exploded and fragmentary perspective view of Figure 2, a detachable portion of the connector **101** extends from the ferrule **10** at the inserted end through a shaped, slightly larger housing **11** which limits the depth of insertion of ferrule **10** in the adapter **18** and provides the means to engage within a matching receptacle in underside of gripper **103.** The removable part further includes an intermediate section of elongated U-shaped housing **80** of a predetermined length that provides an external wall that substantially surrounds and protects the optical fiber **52.** This housing member **80** encompasses an internal length of optical fiber that couples at one end to the ferrule **10** and merges at the other end with an individual different optical fiber **52** in the system. The movable connector **101** also includes a gripper latch receiving element **12** intermediately positioned along its length and a small magnet **13** of high permanent magnetic field strength at a predetermined substantial spacing from its terminal ferrule **10** which provides cooperative functions described in detail below.

The connector **101** also provides predetermined optical, mechanical and magnetic interaction with the system in general and with each different adjacent elongated fixed element **39** in particular. Since, as seen in Fig. 2, each such fixed element **39** extends from the underside of a union adaptor **18** in parallel adjacency to a movable fiber optic connector **101** therein, it incorporates a number of cooperative features along its length. Starting from the free end, the fixed element comprises a pair of bifurcated end sections serving as supportive bases for two small permanent magnets **14,** of the same selected polarity, at like distances from the union adapter **18** end. These may be termed the "unallocate" magnets, to designate their operative function, while a third magnet **15** is centered on the elongated body at a predetermined small lengthwise spacing from the magnet pair **14,** and may be termed the "allocate" magnet. The third "unplugged" state shown in Figure 3 is one that exhibits little magnetic attraction between the inserted magnet **13** and any of the magnets **14** and **15** in the fixed element. The fixed member **39** also includes a short, slightly narrowed docking section **16** intermediate its length, and an adjacent reflector surface **17** that can be used in positioning.

The three different positions of relative engagement of the connector **101** are depicted in Figures 2 and 3. The "allocate" state, as used herein refers to a relationship in which the ferrule **10** of the fiber connector **101** is fully engaged within the mating sleeve of the adaptor **18.** The term "unallocate" refers to the state wherein the fiber connector is partially engaged within the mating sleeve **18.** The "allocate" state produces near zero insertion loss and the "unallocate" state produces about 20 dB or more loss by virtue of the air gap between the fiber connectors. "Unplug" refers to the state in which the fiber connector is fully withdrawn from the mating sleeve, wherein the gripper is able to withdraw a connector **101** from its corresponding connector port **55** for movement to a different destination **55.**

In a preferred exemplification, the four magnets **13, 14, 15** are about 6mm x 6mm x 3mm in size, and their material is Neodymium 42SH. This magnet grade provides high magnetic attraction force of at least 500 gram-force in "allocate" state, and also maintains magnetic properties even when exposed to high temperatures (above 150 degrees C). The N-S magnetization axis is typically parallel to the 6mm side. Ideally, the magnets are nickel-plated so they can be soldered to metalized pads of the printed circuit board connector row using a standard solder reflow process.

### III. PARALLEL ROWS OF FIBER OPTIC CONNECTORS THAT INDEPENDENTLY TRANSLATE LATERALLY UNDER SOFTWARE CONTROL

A portion of the automated cross-connect structure **200** in the present invention thus comprises a stacked arrangement of independently translatable connector rows which form a two dimensional array of ports. A particular example with eight vertically stacked connector rows **102** with a vertical spacing of about 12.5 mm is depicted in Figures 3 and 4. In this particular example, each row **102** is comprised of twelve parallel connector tracks each spaced transversely by about 32 mm. Each connector track is elongated and narrow and has selected flexure properties. The N-S polarity and arrangement of magnets **14, 15** at the distal end of each connector track are identical for each track and row. As a consequence, when the rows are in horizontal (x) alignment as shown in Figure 4, the magnets **14, 15** on each row cause the distal ends of each connector track **39** to repel one another in the x and y directions. These repulsive forces are effectively positioned to partially magnetically levitate the narrow semi-flexible connector tracks **102** and reduce the potential for interference of adjacent rows of extended members **39.**

In the absence of magnetic levitation of fixed members **39** detailed in Figure 2, deflection of the extended connector track could otherwise occur due to the tension vector of the fiber optic connector **101** engaged therein. The minimization of deflection is effective to eliminate potential jamming of vertically adjacent rows and the fiber connectors seated therein during the independent row shuffle process.

In further accordance with this invention, each connector row is supported at opposite ends by sets of three miniature rotary bearings mounted in bearing blocks **43, 49** that provide guidance in the two axes (x, z) parallel to the surface of the connector row, and support it above the lower row. Each bearing rides within its own track within an injection molded plastic guide block **45, 46** on the left and right ends respectively, as viewed in Fig. 4. A central support roller **38** further provides a mechanical reference point at the center of the row to preclude a potential slight bowing along its length of the mechanical row assembly **102.** This reference surface provides adequate support to prevent large deflection of the connector row during gripper engagement when the gripper mechanically latches onto a particular track **39** of the connector row.

Preferably, the connector row **102** is comprised of a printed circuit board substrate made of common circuit board materials such as FR-4 with a thickness of 2.4 mm for high stiffness. This material is flat, stiff, inexpensive, and facilitates the reliable placement and soldering of magnets onto the circuit board. The ability to add circuitry also enables the implementation of RFID tracing of connectors as well as optical power monitoring and detection.

Each connector row **102** is independently shiftable by a motor **20-1,** only some representative examples of which are seen in Figure 4 and which are shown as a unit of four motors in Figure 1A. This motor **20-1** is typically a linear permanent magnet dc stepper motor that provides precise, programmable linear translation of the row over about 37 mm range of travel. The low friction of the bearing track assemblies **43** and **44** ensures that only a minimal force (<100 gram-force) and low current are required to actuate each row.

As seen in the perspective views of Figures 3 and 4 of the connector row subassemblies **102,** the narrow elongated elements **39** in each row are positioned to define like vertical columns or stacks of elements **39.** These elements are horizontally separated from each other by a standard distance which in this example is about 37 mm. For clarity only one fiber connection assembly **101** is depicted in the upper view of Figure 3, and shown as coupled to an internal fiber **52** leading to an external buffer port (not shown) in the system. It will be understood from the referenced previously issued patents that interweaving through the three-dimensional mass of fibers **52** is effected by laterally shifting the rows of elongated fixed elements in timed relationship to the instant vertical position of the fiber transport. The fiber is thus repositioned by being interwoven through the existing pattern of fibers, without entanglement, until it reaches its destination, where it is engaged in the terminal thereat, as described in the earlier issued patents.

Those skilled in the art will appreciate the problems that can potentially be encountered when navigating a thin element such as an optical fiber through a dense population of other optical fibers. In this respect, the employment of static small magnetic elements on narrow elongated elements to provide strategic magnetic attraction and repulsion forces, offers material benefits in the form of the presently disclosed system, both as to changing positions of elements and in maintaining stable operating states.

### IV. NARROW FORM FACE GRIPPER TO SELECTIVELY TRANSPORT, INSTALL AND REPOSITION FIBER OPTIC CONNECTORS IN A DENSE MATRIX

Figures 5, 6 and 7 illustrate an electronically actuable gripper device **103** changeably interlocked or docking with a typical connector row **102** to produce adequate local actuation force at the connector **101** to vary the position of a fiber connector **101** in the two dimensional array of output ports **81** as best seen together in context in Figures 1-4. The gripper is shown in three primary states of axial engagement corresponding respectively to the fiber connector **101** being"allocated" (Figure 5) (or operatively engaged), "unallocated" (or partially inserted) (Figure 6), or "unplugged" or fully disengaged (Figure 7) from the connector and free to be moved elsewhere (or inserted). The gripper **103** descends onto the connector row and stops upon optically detecting engagement with a particular individual track element **18** of the connector row **102** using a reflective optical photo-interrupter sensor **27-6.** The light from the sensor is reflected from the edge of the connector track by a reflective plating **17** (Figure 2), which is typically gold, and instructs the trajectory control system **117** (Figure 18) that the gripper is properly docked onto the track element **18.** The interlocking is accomplished by mechanical engagement of the gripper guides **20** with the reduced-width docking section **16** (as best seen in Figure 2) present on each track element **18.** The gripper subsystem comprises two closely adjacent printed circuit boards **60** and **29** lying in the narrow vertical plane which extends down to any selected row, the gripper subsystem also including multiple sensors and actuators. The upper circuit board **60** is attached to the lower end **35** of the telescopic robot actuator (see Figure 5). The adjacent lower sliding circuit board **29** is mounted on a linear bearing assembly, including parallel horizontal upper and lower shafts **26-1** and **26-2** respectively, so that this portion of the gripper, which is not fixed to the closely adjacent gripper board **60,** can translate horizontally in either direction between closely spaced limits within the same narrow columnar region as the fiber connector **101.** Sensors **27-1, 27-2,** and **27-3** detect the translation of the overlapping but lower circuit board **29** in the allocate, unallocated and unplug locations, respectively, as the distance d decreases from d₁, d₂ to d₃, respectively. The lower sliding circuit board **29** includes mechanical elements **79, 80** spaced along its length that can retain **(79)** and lock **(80)** onto the length of the fiber connector **101.** Optical sensors are typically reflective and/or transmissive photo-interrupters. A solenoid **23** responsive to control system **117** triggers a spring loaded mechanical latch **24** within the locking element housing **80,** wherein the state of the latch is detected by reflective photo-interrupter sensor(s) **27-4** and **27-5** integrated on electronic circuit board **29.** In a particular example, translation of the gripper device **103** is powered by a motor **32** and timing belt drive consisting of a timing belt pulley **28** and timing belt **25,** or a high efficiency drum/wire drive system.

In a further example, to identify fibers based on their barcode and to provide machine vision alignment, the gripper **103** may further include a camera **21** and LED illuminator **22** to capture images of the connector **101** and its unique barcode identifier. Alternatively, the reel encoder circuit **51** enables any fiber to be uniquely identified by monitoring the reel encoder sensor signal **72** as the fiber is transported by the gripper.

In a particular example, the gripper **103** provides about 19 mm of linear travel, sufficient to allocate (Figure 5, d₁), unallocate (Figure 6, d₂), or unplug (Figure 7, d₃) the connector **101** as commanded where the incremental distances d₁, d₂ and d₃ are approximate as depicted. When unplugged, the connector **101** can be transported vertically without interference through the lateral volumetric space **118-j** extending from the top to bottom of any particular column j, between and independent of all other fibers in the matrix. When a connector assembly **101** is delivered to its destination track **39** on the connector row, its forward tip **10** is adjacent but spaced apart from the chosen fixed connector in the assembly of connectors **102,** as seen in Figure 7. The gripper assembly **103** is thus held in the "unplugged" position, as seen in Figure 7 prior to allocation. In this mode the lower planar circuit board **29** of the gripper assembly **103** is spaced apart from the connector **102.** The gripper guide **20** remains fixed as the lateral position of fiber connector assembly **101** changes. Full engagement is seen in the view of Fig. 5, in which the lower printed circuit board **29** has been shifted to the left by the actuated gripper assembly **103** in response to energizing the motor **32** of gripper actuator. This is the "allocate" position, in contrast to Figure 6, which shows the "unallocate" or partially engaged position, and Figure 7, in which there is no connector engagement.

### V. TELESCOPIC ROBOTIC VERTICAL ACTUATOR

The gripper device **103** is mounted on the lower end of, and is transported by, a two-axis robot mechanism **104** as illustrated in Figures 1A, 8A, 9, 10A, 10B and 10C. The robot device **104** is telescopic in the vertical direction to enable the gripper device **103** to reach a large number of cross-connects within a height constrained installation. It comprises a rectangular outer arm or stage **30** and an inner arm or stage **35,** and is movable in the horizontal direction by a drive belt **25** or wire/string extending between fixed end points. The vertical telescoping and horizontal movement capability ensures that the arm can reach all connectors within the two-dimensional array of rows of connector ports **55** (Figure 2) without adding excessive height to the overall robotic cross-connect system above the 2.15 meter height standard preferred by the industry.

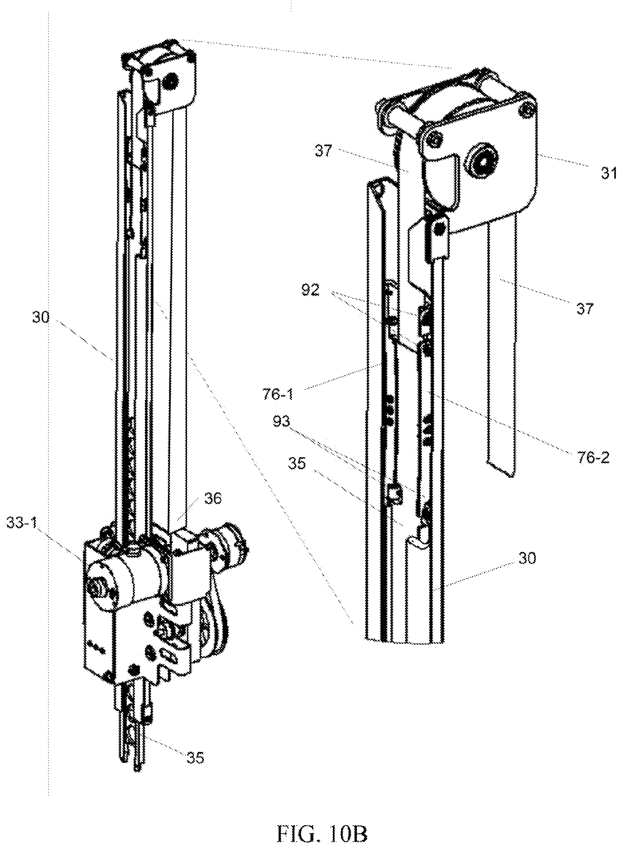

Telescopic robot arms in the prior art do not have the required stiffness nor the aspect ratio/miniaturization needed to descend and operate in between the internal fiber connectors with requisite positioning accuracy (~ +/-3 mm) of the internal connector with tensioned fiber attached. In the present system, however, a vertical linear outer stage **30** of a slender hollow rectangular or partial rectangular cross section receives a sliding interior member **35** of smaller cross section. As seen in Fig 10B the top end of the inner stage **35** of the robot arm includes an internal carriage **76** that spring-loads roller bearings **92, 93,** which contact the inner side walls of the rectangular or "C" shaped hollow cross section outer arm **30.** In the preferred embodiment the outer stage **30** and inner stage **35** are stainless steel or plain steel; however, aluminum, plastic, fiberglass and carbon fiber are all suitable alternatives.

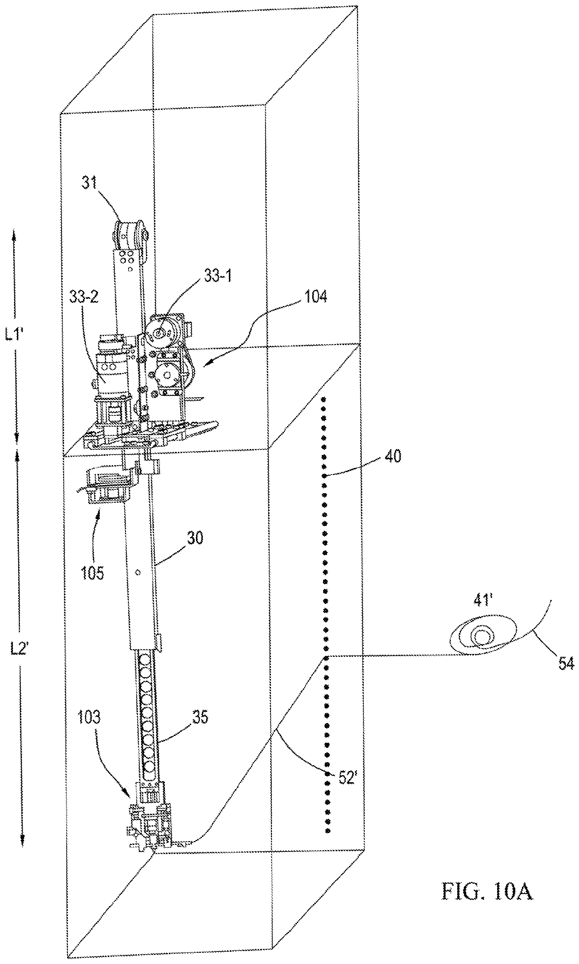

The gripper mechanism **103** is attached to the lower end of the inner stage **35** of the robotic arm system, which telescopes within the tubular outer stage **30** and variably extends in length, as seen in Fig. 9 and 10A. The electrical cable **37** carrying electrical signals for the sensors and actuators embedded within the gripper **103** travels up the inner stage **35,** then through the outer stage **30,** exits the top of the outer stage **30,** wraps around an upper pulley **31** and then extends down to a fixed attachment point at **36.** As seen in Figs. 8A and 9, a y axis motor **33-1,** for example a dc servomotor or stepper motor, drives the tubular outer stage **30** up and down through a timing belt drive mechanism attached to the top and bottom of the stage **30.** The multiconductor electrical ribbon cable **37** is rigidly affixed to the top of the inner stage **35** and its midpoint is fixed at a cable attachment point **36.** As the outer stage **30** moves up and down (Figure 8D), the inner stage **35** moves at twice the outer stage distance because of the action of the cable **37** looping over the pulley which is attached to and moves with the outer stage.

The telescopic arm exhibits relatively low transverse compliance or equivalently high rigidity. In a particular example, less than 2 mm of deflection results for about 50 gm of transverse force applied perpendicular to the telescopic direction (i.e. in x and z directions defined in Figure 1) and high length efficiency (ratio of the telescopic arm range L₂ = 1.5 meters to arm retracted height L₁ = 1m, Figures 9, 10A, 10B). This rigidity is important to prevent the tension from the fiber 52 attached to connector **101** from dragging or deflecting the telescopic arm out of true vertical alignment. In contrast to prior art telescopic arms (e.g. drawer slides, telescopic booms, etc.), the transverse compliance is independent of extended length L₂ L₂' (0 to 1.5 meters) of the telescopic structure. This is a significant advantage of the present invention, because reliable engagement of any connector **101** across the extended front connector array, by gripper **103,** also requires some non-zero level of deflection and consistent deflection and compliance characteristics to enable automatic, passive alignment via the mechanical capture method. On the other hand, low vibration at all locations of the connector array at the end of the telescopic arm should also be maintained.

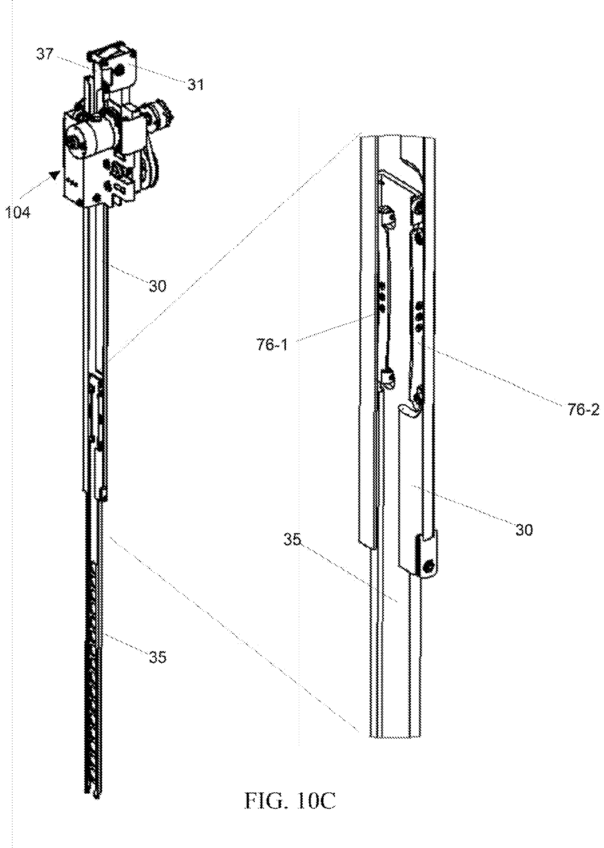

In accordance with the invention, tightly controlled compliance characteristics are achieved by (1) providing a roller bearing system for the outer, first stage that is very stiff and (2) providing a roller bearing carriage for the inner, second stage, wherein a set of bearings are located at the upper 150 mm of the inner, second stage, suitably preloaded by mounting the inner carriage bearings on flexures **76-1, 76-2** so that the carriage is guided within the tube **30** with high angular consistency. The bearing system is illustrated in part in Figures 10B and 10C and is comprised of internal x axis support bearings **92,** and internal z axis support bearings **93.** To preload the system there are further preloaded internal x support bearings **92'** at opposite, suspended ends of flexure **64** and preloaded internal z support bearings **93'** at opposite, suspended ends of flexure **76.**

The bearing flexures **76-1, 76-2** are, for example, semi-hard stainless steel sheet metal structures deflecting under load like a leaf spring, with radial ball bearings **93** attached at both ends of the flexure arm. Mechanical stress arising from deflection is by design smaller than the yield stress of the material, thereby preventing the flexure from permanently deforming. These flexure arms **76-1, 76-2** are affixed to the rigid, steel inner second stage at the top of the stage **35** so that the opposite bearings are preloaded and in contact with the outer tube as they ride up and down the inner cavity of this outer first stage **30.** The friction of the bearing assembly is sufficiently low that the inner stage descends controllably within the outer tube due to gravity alone and is supported by the electrical ribbon cable **37.** This cable serves two purposes: it resists gravity preventing the arm from dropping and transmits signals from the gripper **103** to the trajectory control system **117.** This cable **37** is routed around the pulley **31** attached to the top of the outer stage **35** and affixed to the main robot x axis carriage **61.**

Figure 8B is a schematic top-view of the horizontal or x-axis carriage drive system, consisting of a timing belt **25-1** with drive pulley **28-2** coupled to the x axis servomotor **33-2** with gearbox at one end, and an idler pulley **28-1** at the opposite end. The x-axis platform **61** is attached to timing belt **25-1,** which translates the platform from one end of the x rail to the other end.

Figure 8C is a schematic side-view of the y-axis actuation system, detailing the timing belt pulley drive system. A first timing belt **25-2** is affixed at opposite ends to the outer y axis tube **30** and is used to drive the tube **30** up and down. Timing belt **25-2** is redirected and wrapped around timing belt drive pulley **28-6** by a pair of idler rollers **28-7** and **28-4.** Drive pulley **28-6** and reduction pulley **28-5** are rigidly attached to a common central shaft **28-6.** The drive motor **33-1** turns a small drive pulley **28-3.** A timing belt **25-3** wraps tightly around both a small diameter pulley **28-3** and a spaced apart large diameter pulley **28-5.** The ratio of large to small pulley diameters is typically 5 to 10 to produce a torque multiplier.

As depicted in Figure 8D, driving the outer arm **30** with the timing belt raises or lowers the pulley **31** by a corresponding distance X, since the pulley **31** is mounted to arm **30.** The pulley **31** is free to spin. A fixed length elongated band or wire **37** is attached at one end to a fixed point **36** of y drive platform, and the opposite end is attached to topmost portion of inner stage **35.** This configuration results in the robot arm inner stage **35** moving at *2X,* twice the distance of the robot arm outer stage **30.** Figure 8D illustrates the configuration of the arm at various degrees of telescopic extension. The wire **37** is wrapped around moving pulley **31.** For a particular distance X₁ the outer arm **30** moves, the pulley also moves in the same direction the same distance X₁. Since the cable is a fixed length and suspends the inner stage **35,** as the pulley moves a distance X₁ the translating end of the cable moves by a distance 2X₁. As a result, the inner stage **35** moves a distance 2X₁.

A particular exemplification of the gripper shown in Figures 8E, 8F and 8G, to which reference is now made, details a drive mechanism for reliably incrementing a selected optical fiber mounted on the fixed printed circuit board **60.** The gripper includes a stepper motor **32** which rotates a gripper drive drum **122** on which a cable **25'** is wrapped with a controlled looseness or "play." The winding of wire **25'** on drum **122** pulls the outer structure **29,** riding on parallel rods **26-1, 26-2** to the right (as shown by the arrow in Figure 8F) by tightening the portion of wire **25",** seen here on the left side of Figure 8F, or left (Figure 8G) by tightening the portion of wire **25"** as seen on the right side of Figure 8G. The provision for a chosen degree of slack within the wire provides a significant improvement in the amount of torque and corresponding linear actuation force available from a given stepper motor. Under typical operating conditions, the motor **82** must drive the gripper from an initial position of maximum resistance, thereby requiring the maximum torque at the start of motion. If the wire has no slack, the motor would need to overcome a large initial force as it accelerates. This is the force to plug-in or un-plug an internal LC connector **101.** It is known in the art that stepper motors stall under conditions of high torque during an initial start-up acceleration. By providing a length of slack wire **25'** on each side of the drum **122,** the motor initially experiences only minimal load as it takes up slack by winding excess wire on drum **122.** As a result, the motor is not subjected to the large load until after (1) it reaches a minimum velocity/is no longer in acceleration phase and (2) the wire no longer exhibits slack in taut section **25"** on one side or the other (e.g. Figures 8F, 8G).

The stepper motor pull-in torque is the measure of the torque at which the stepper motor will stall when it is starting from rest. The pull-in curve defines an area called the start/stop region. When operating with proper selection of parameters such as velocity, acceleration and load torque, the motor can be started instantaneously with a load applied and without loss of synchronism. The slack wire in the cable drive ensures that this load torque is initially low (Figure 8H). In contrast, stepper motor pull-out torque is the torque that can be produced at a given velocity until the motor stalls. The pull-out torque is typically at least a factor of 2 higher than the pull-in torque. It is therefore advantageous for the gripper stepper motor to operate in the pull-out torque regime when experiencing the largest loads associated with plugging-in/unplugging internal connectors **101,** to ensure the maximum torque output for a given z drive system.

### VI. SLACK-FIBER TAKE-UP REELS AND ROTATION SENSING

The fiber connectors in the assembly **101** terminate as output fibers **52** (Figure 11A) from low profile spring-loaded reels **41** (Figure 11B) that are arrayed on a planar, low profile tray **47,** as shown in Figures 11A to 13A. This example of a fiber tray assembly **106** (Figures 11A and 11B) includes twelve fibers that are rendered individually and independently self-tensioning, by reels **41** to which the fibers **52** are guided after passing through a center backbone of linearly arrayed flexible guides **40.** Flexible guides are typically a low friction tubing material such as PTFE, FPA, FEP, etc. In the particular example shown here, the opposite ends of each of the twelve fibers exiting the backbone have originated in connectors that are plugged individually into different ones of a linear array of union adaptors or mating sleeves **18.** The internal paths of the fibers **52** between the interior reels **41** and the output connector array **42** are depicted in Fig. 11B.

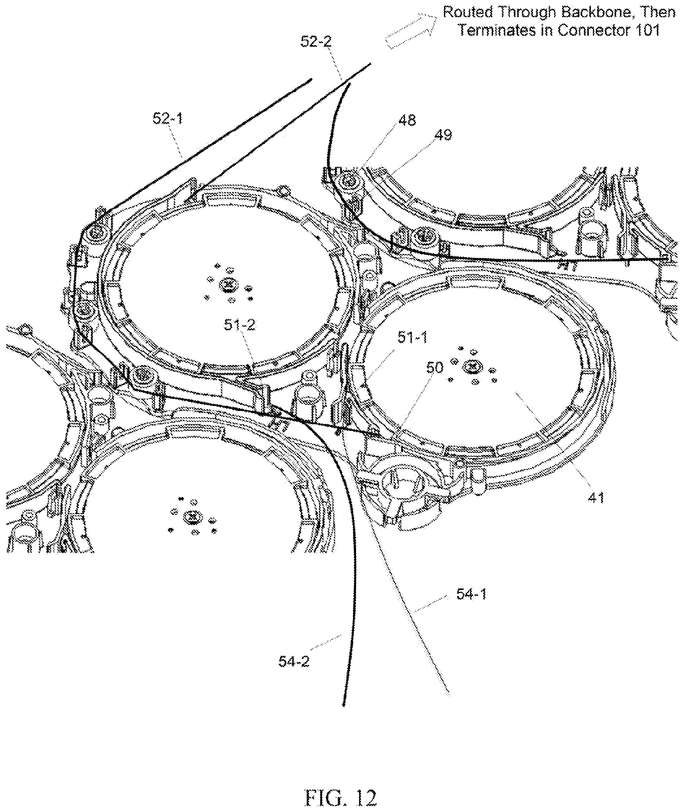

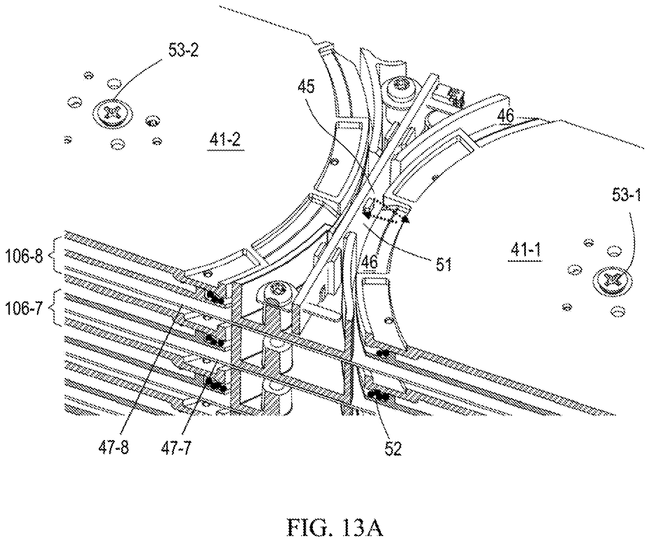

The fragmentary perspective view of Figure 12 details the paths of the fibers to individual reels including front, dynamically moving fibers **52** exiting from the reel fiber exit location **50** and terminated in connectors to form the dynamic output connector array **81** (Figure 1A), and rear, fixed length fibers **54** (Figure 11B), also exiting from reel location **51** and ultimately terminated in connectors to form the static input connector array **82.** As seen in Figure 12, the fibers are routed through O-ring eyelets **49** and around rollers **48** to redirect the dynamically moving fibers with low friction and low stress as they experience an angular change of about 90 degrees while passing around an intervening reel **41.** As the fibers **52** are withdrawn or retracted back into a reel, the reel **41** rotates, causing the reel's internal fiber to spiral on its underside (as disclosed in U.S. Patent No. 8,068.715 ) so as to coil or uncoil, respectively. As seen in Figure 13A, the outer wall of the reel is segmented and/or colored with alternating reflective/non-reflective circumferential segments **46** such that a reflective photo-interrupter **45,** in combination with an electronic multiplexing and counter circuit **51** detects the number of turns the reel undergoes. This provides validation during operation that the proper length of fiber **52** is present on the reel as a function of the movement of fiber connector **101** during robot control.

Different novel aspects of an improved multi-reel module are also depicted in Figures 11 to 13. Figures 11A and 11B, for example, illustrate an advantageous geometric layout of twelve reels **41** for providing individually adjustable lengths of optical fiber. Here, each fiber tray assembly **106** distributes individual optical fibers from the backbone **40** to reels **41** which are linearly aligned in spaced apart sets of four extending from front to back on the tray **47.** Furthermore, these reel sets are each adjacently positioned so that the pairs of adjacent reels each define an acute angle relative to the front to back axis on the tray **47.** There are thus six reels on one side of the tray **47,** and six reels on the opposite side positioned in oppositely angled pairs with an open central area of the tray **47** providing a pathway to input fibers from the backbone **40** input.

The fiber inputs **52** to the different reels **41** feed into the central area and are directed clockwise about the individual reels in the left (as seen in Figure 11B) side set of six reels, and counterclockwise about each of the six reels on the right-side set. Since the reels of each pair are closely adjacent but spaced apart, the paths of fibers incoming from the central backbone **40** are different, dependent on whether a reel is the innermost one of the angled pair, or the outermost one of the pair. The problem is resolved, while still maintaining compactness and control, by the fiber guide geometry shown in Figure 12, to which reference is now made. The inner (closest to the center) reel **41** of an angled pair receives a variable length of fiber **52** to take up or supply fiber as needed during reconfiguration. The variable length reconfigurable, auto-tensioned fiber **52** is controllably guided with curvature of greater than a minimum acceptable bend radius (typically > 5 mm). The reels of each pair are closely adjacent but operatively distinct, which result is made possible by the angled and spaced geometry of the reels **41** of any module. At the opposite end of the fiber, a fixed rear length of fiber **54** is fed to the individually coupled rear union adapter **42** (Figure 11).

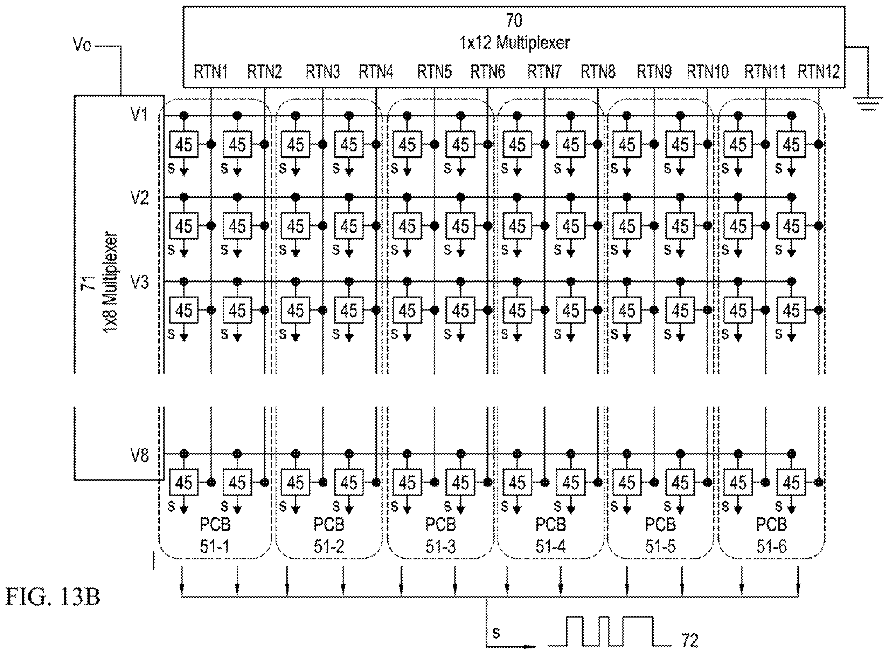

A useful novel expedient for monitoring the dynamic operation of the multiple reels **40** is provided by the sensor arrangement depicted in Figure 13A and an example of the associated multiplexing circuitry as depicted in Figure 13B. Referring to those figures it can be seen that a small reflective photo sensor **45** is mounted in a thin wall adjacent the periphery of a take-up reel **41.** The sensor **45** is positioned outside the take-up reel and generates a signal which varies with the then adjacent circumferential segment of the take-up reel **41.** There are, as seen in Figure 12, seven such indented (small radius) segments, evenly distributed around the periphery of each fiber take-up reel **41.** Thus, as the reel rotates to feed out or take up fiber, a responsive signal from the associated sensor **45** is sent to reel encoder circuits **51.** These circuits **51,** one for each individual reel **41,** provide signals responsive to the changing rotational position of the reel. To read out any particular sensor, the electronic multiplexers **70, 71** in the internal monitoring system must be set to its particular address. As shown in Figure 13B, multiple individual power and ground lines from different sensors **45** can be shared by feeding into separate multiplexer circuits **70, 71** to selectively activate a particular reel and generate signals **72** corresponding to its particular reel **41,** for processing by command circuits **51** which monitor the operation of the multiple reels.

### VII. AUTOMATIC FIBER ENDFACE DRY CLEANING CARTRIDGE WITH INTEGRAL SENSING FOR PROCESS CONTROL

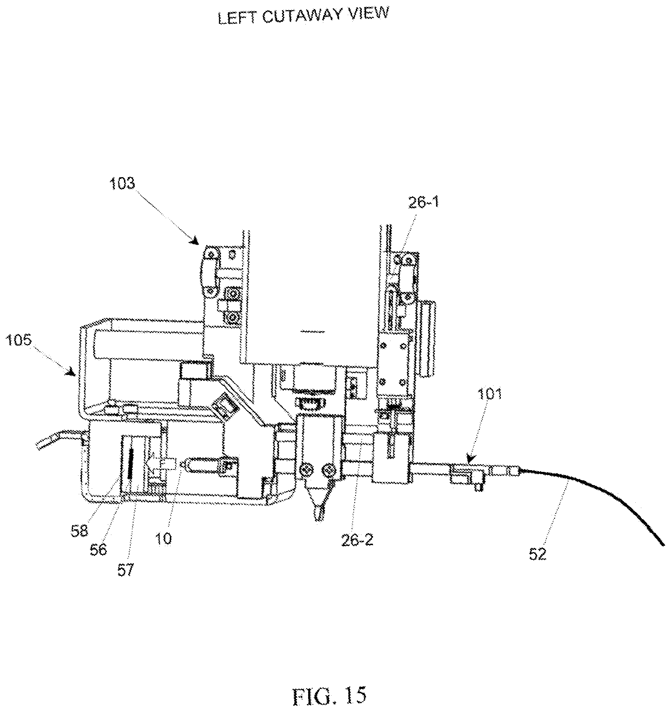

Reference is now made to Figures 14, 15, 16A and 16B, which illustrate partial cutaway and perspective views of an advantageous cleaner device **105** detailing how force sensing is effected by means comprising a compliant pad **57** behind a cleaning fabric **58,** further including a force sensor **56** within the compliant pad **57** which detects the existing ferrule tip compressive force F, the direction of which is indicated by the block arrow in Figures 14 and 15. A fiber connector **101** within the gripper **103** is raised to above the fiber interconnect volume and the top most fiber module **113-10** along the y axis so that the connector is at the elevation of the cleaning cartridge **105.** The cleaning cartridge is mounted rigidly to the bottom of the translating x axis carriage **61** and moves with the carriage as it translates in x. The cleaning fabric is advanced by moving the robot to the far right, to depress the cleaning cartridge advance lever **75** which advances the cleaning fabric to a clean, unused portion of the fabric. In a particular example, the force sensor **56** is a substantially planar element on a flexible substrate with internal electrode features that include two wire terminals **59,** and produces a resistance change proportional to the average local force within the sensing region. The sensing region is typically 5 to 10 mm in diameter and the thickness of the sensor is typically 0.25 to 0.5 mm. The sensor wires **59** are interfaced to an external electronic circuit **107** including a voltage divider, wherein the target force sensing threshold is 100 gm-F and the reference resistor value of the voltage divider is selected to produce a voltage of about 2.5V for a supply voltage of 5V. A typical resistance crossing value for the force sensor is 100KΩ and the reference resistor is typically chosen to be 1MΩ. A comparator in the circuit **107** converts the analog voltage on the voltage divider into a digital signal. This digital signal is input to a controller **108** and monitored by embedded control software to accurately terminate the gripper **103** and fiber **101** advancement at the prescribed cleaning fabric compression force. The robot gripper **103** (Figure 14) moves the fiber end face **10** of the connector **101** until the fiber end face touches the fabric and compresses the compliant pad **57** behind the fabric. The force sensor is integral to the compliant pad **57** and senses the compression therein. The desired force for automated cleaning is in the range of 25 gm-F to 250 gm-F. Control of force within a range is important because excessive force can create tears in the fabric and contaminate fiber; inadequate force can result in incomplete cleaning.

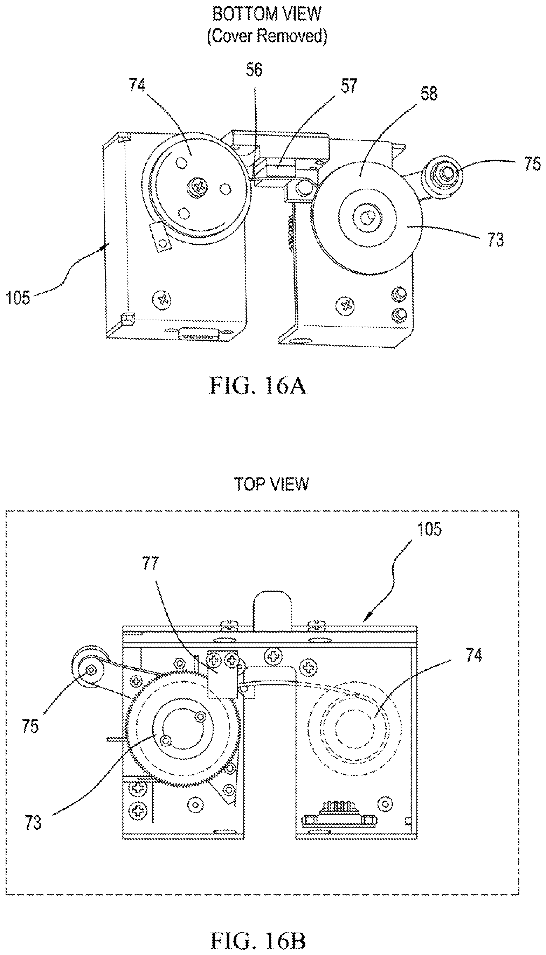

Furthermore, in accordance with the invention, the cleaning cartridge **105** which is disclosed provides integral sensing of the cleaning fabric consumption. Referring to Figures 16A and 16B, the cleaning cartridge includes sensing means, such as a reflective photo-interrupter **77,** to detect the advance of the cleaning fabric **58** from its spool, feeding its signals to the electronic circuits **107** and **108** (Figure 14). The cleaning cassette fabric **58** is fed from the supply spool **73** past the cleaning cassette pad **57** and the sensor **56** to the dispense spool **74.** The cleaner advance lever **75** is actuated to feed the fabric **58** in increments as needed by horizontal movement along the x axis to depress the lever when it strikes the hard stop in the vicinity of the rightmost limit of travel. As is evident from the perspective view in Figures 14 and 15 of the relationship of the gripper assembly **103** when it is in operative relationship to the cleaning cartridge **105,** the supply spool **73** and dispense spool **74** straddle the cleaning cassette pad **57.** The spacing between the two spools thus facilitates accessing any chosen optical fiber ferrule **10** in operative position for cleaning and return to operative position in the precisely ordered bank of changeable optical fibers. At the same time, the source of cleaning material is large enough for many different cleaning sequences, but readily replaced when adequately used or when an inspection is needed.

In conclusion, new mechanisms and designs to achieve reliable operation of compact, robotically reconfigured, software-defined fiber optic patch-panels are disclosed herein. Those skilled in the art will readily observe that numerous modifications and alterations of the devices may be made while retaining the teachings of the invention.

### VIII. APPENDIX- DRAWING LEGEND

| | |
|---|---|
| 10 | Polished fiber ferrule |
| 11 | Plastic connector housing |
| 12 | Gripper mechanical locking feature |
| 13 | Connector magnet |
| 14 | Connector row unallocated magnets |
| 15 | Connector row allocate magnet |
| 16 | Reduced width mechanical feature for docking |
| 17 | Edge plated reflector |
| 18 | Fiber optic union adapter |
| 19 | Connector row actuator |
| 20 | Gripper guides |
| 21 | Camera |
| 22 | LED illuminator |
| 23 | Solenoid |
| 24 | Latch of solenoid |
| 25 | Cable or timing belt |
| 25' | Loose cable drive |
| 25" | Taut cable drive |
| 26 | Gripper translation shaft |
| 27 | Reflective photo-interrupter |
| 28 | Timing belt pulley |
| 29 | Gripper sliding printed circuit board |
| 30 | Robot arm outer stage |
| 31 | Telescopic arm cable pulley |
| 32 | Gripper actuator |
| 33 | Motor |
| 35 | Robot arm inner stage |
| 36 | Fixed cable attachment point |
| 37 | Electrical cable |
| 38 | Central support roller for row |
| 39 | Connector track |
| 40 | Backbone with flexible guides |
| 41 | Fiber take-up reels |
| 42 | Rear fiber optic union adapters |
| 43 | Left bearing block |
| 44 | Right bearing block |
| 45 | Reflective photo sensor |
| 46 | Reflective reel segments |
| 47 | Tray for reels |
| 48 | Fiber rollers |
| 49 | Ring eyelets |
| 50 | Reel fiber exit location |
| 51 | Reel encoder PCB |
| 52 | Internal, reconfigurable, auto-tensioned fibers |
| 53 | Reel axis of rotation |
| 54 | Rear, fixed fibers |
| 55 | Reconfigurable fiber optic connector ports |
| 56 | Cleaning cassette sensor |
| 57 | Cleaning cassette pad |
| 58 | Cleaning cassette fabric |
| 59 | Pair of electrical wires from force sensor |
| 60 | Gripper center printed circuit board |
| 61 | Robot x carriage |
| 62 | External fibers |
| 63 | Output fiber connector mount |
| 64 | Magnetic steel insert |
| 70 | Column electronic multiplexer for sensor |
| 71 | Row electronic multiplexer for sensor |
| 72 | Reel encoder sensor signal |
| 73 | Cleaning fabric supply spool |
| 74 | Cleaning fabric dispense spool |
| 75 | Cleaner advance lever |
| 76 | Spring loaded rollers |
| 77 | Cleaning fabric usage sensor |
| 78 | Output connector array support structure |
| 79 | Gripper connector retaining feature |
| 80 | Gripper connector locking feature |
| 81 | Dynamic two dimensional array of output ports |
| 82 | Static two dimensional array of input ports |
| 101 | Fiber connector assembly |
| 102 | Connector row assembly |
| 103 | Actuated gripper assembly |
| 104 | Two axis robot |
| 105 | Cleaning cartridge |
| 106 | Fiber tray assembly |
| 107 | Voltage divider, mux & comparator circuit |
| 108 | Controller & logic |
| 109 | Server module |
| 110 | Ethernet switch module |
| 111 | Power management module |
| 112 | Robot module |
| 113 | Fiber module |
| 114 | Docking module |
| 115 | Optical power monitor module |
| 116 | Gripper sensor circuit |
| 117 | Trajectory control system |
| 118 | Gripper travel location within column gaps |
| 119 | Projection of fiber trajectories onto xz plane |
| 120 | X axis drive |
| 121 | Y axis drive |
| 122 | Gripper drum |
| 200 | Automated patch panel system |

## Claims

1. A stacked arrangement of connector rows (102-1 - 102-8) which form a two dimensional array of ports (55),
wherein each connector row (102-1 - 102-8) comprises a plurality of connector tracks (39),
wherein each connector track (39) includes magnets (14, 15) at a distal end thereof,
wherein an N-S polarity and arrangement of the magnets (14, 15) is identical for each connector track (39) and connector row (102-1 - 102-8).

2. The arrangement according to claim 1, wherein each connector track (39) extends perpendicularly from a coupling plane.

3. The arrangement according to any of the preceding claims, wherein when the connector rows (102-1 - 102-8) are in horizontal alignment, the magnets (14, 15) on each connector row (102-1 - 102-8) cause the distal ends of each connector track (39) to repel one another in the horizontal and vertical directions.

4. The arrangement according to any of the preceding claims, wherein each connector track (39) has a length to width ratio of greater than 10:1.

5. The arrangement according to any of the preceding claims, further comprising a number of two-sided optical couplers (18) disposed in parallel rows in a coupling plane, and wherein each connector track (39) is attached adjacent and below a different optical coupler (18).

6. The arrangement according to the preceding claim, wherein the optical couplers (18) are spaced apart by a predetermined gap in a first direction, and wherein the first predetermined gap is sufficient to allow fitting of a gripper device (103) within the predetermined gap.

7. The arrangement according to the preceding claim, wherein the connector rows (102-1 - 102-8) are stacked orthogonally to the first direction to form columnar gaps.

8. The arrangement according to the preceding claim, wherein the columnar gaps are sufficient to allow an elongated extremity of a telescoping arm assembly (104) move both within and outside the columnar gaps.

9. The arrangement according to any of the preceding claims,
wherein the connector tracks (39) are flexure elements (39).

10. A fiber optic cross-connect system (200) comprising the arrangement according to any of the preceding claims.

11. The system according to the preceding claim, further comprising a telescopic arm assembly (104) and a gripper device (103) mounted at an end of the telescopic arm assembly (104), and wherein the telescopic arm assembly (104) is configured to transport said gripper device (103) between the connector tracks (39).

12. The system according to any of the 2 preceding claims,
further comprising fiber connectors (101),
wherein the fiber connectors (101) are each connectable with the connector tracks (39).

13. The system according to the 2 preceding claims, wherein the gripper device (103) is configured to plug-in, unplug or partially disconnect a fiber connector (101) to/from a connector track (39).

14. The system according to the preceding claim, wherein the gripper device (103) is configured, upon unplugging a fiber connector (101), to transport it in a deterministic, optimal weaving pattern between surrounding optical fiber connectors (101) of the array of optical fiber connectors (101) upon manipulation by the telescopic arm assembly (104).

15. The system according to the preceding claim, wherein each fiber connector (101) includes one small permanent magnet (13) positioned therein to interact with the magnets (14, 15) on an adjacent connector track (39) when the fiber connector (101) is connected thereat.
